# EUROPÄISCHE PATENTSCHRIFT

(11) **EP 3 886 303 B1**
(45) Veröffentlichungstag und Bekanntmachung des Hinweises auf die Patenterteilung: **08.03.2023**
(21) Anmeldenummer: 20185121.9
(22) Anmeldetag: 10.07.2020
(51) Int. Cl.: H02K 15/06, H02K 15/04

(54) **VERFAHREN UND VORRICHTUNGEN ZUM AUFNEHMEN, SPANNEN ODER EINFÜGEN VON SPULENMATTEN FÜR EIN BAUTEIL EINER ELEKTRISCHEN MASCHINE**
METHOD AND DEVICES FOR RECEIVING, TENSIONING OR INSERTING COIL MATS FOR A COMPONENT OF AN ELECTRIC MACHINE
PROCÉDÉ ET DISPOSITIFS DE RÉCEPTION, DE SERRAGE OU D'INSERTION DE MAT DE BOBINES POUR UN COMPOSANT D'UNE MACHINE ÉLECTRIQUE

(30) Priorität: 23.03.2020 DE 102020107920
(43) Veröffentlichungstag der Anmeldung: 29.09.2021
(73) Patentinhaber: Grob-Werke GmbH & Co. KG, 87719 Mindelheim (DE)
(72) Erfinder: FENDT, Simon, 86899 Landsberg (DE); SCHMID, Frederik, 89281 Altenstadt (DE); RAUSCHER, Ralf, 87748 Fellheim (DE); FENDT, Dominik, 86513 Ursberg (DE)
(74) Vertreter: KASTEL Patentanwälte PartG mbB

(56) Entgegenhaltungen:
- EP-A1- 3 731 373
- WO-A1-2006/110498
- WO-A1-2017/153502
- US-A1- 2004 261 885
- US-A1- 2010 000 077

## Beschreibung

Die Erfindung betrifft ein im Zuge der Herstellung eines Bauteils einer elektrischen Maschine durchzuführendes Spulenmattenaufnahmeverfahren zum Einfügen einer Spulenmatte in eine ringförmige Anordnung radial nach außen öffnender Nuten. Weiter betrifft die Erfindung ein im Zuge der Herstellung eines Bauteils einer elektrischen Maschine durchzuführendes Fügeverfahren zum Einfügen einer Spulenmatte in ein ringförmiges Gehäuse des Bauteils der elektrischen Maschine, welches mit radial nach innen öffnenden Nuten zur Aufnahme einer durch die Spulenmatte zu bildenden Spulenwicklung versehen ist. Weiter betrifft die Erfindung eine Spannvorrichtung zum Einfügen einer Spulenmatte in eine ringförmige Anordnung radial nach außen öffnender Nuten. Schließlich betrifft die Erfindung eine Fügevorrichtung zum Einfügen einer Spulenmatte in ein ringförmiges Gehäuse eines Bauteils einer elektrischen Maschine mit einer solchen Spannvorrichtung.

Die Erfindung liegt auf dem Gebiet der Herstellung von Bauteilen von elektrischen Maschinen, d.h. insbesondere Statoren oder Rotoren von Generatoren und Elektromotoren. Insbesondere sollen Spulenwicklungen für Bauteile von Elektromotoren hergestellt werden, die als Fahrmotoren für Elektrofahrzeuge in Großserie hergestellt werden sollen, und vorzugsweise eine Nennleistung im Bereich von 20kW bis 400 kW aufweisen sollen.

Für eine elektrische Maschine, wie insbesondere Elektromotor oder Generator, ist es aus dem weiter unten erläuterten Stand der Technik bekannt, eine verteilte Wellenwicklung vorzusehen. Hierbei wird als ein Verfahren die Wellenwicklung außerhalb des Bauteils, wie insbesondere Stator, vorgefertigt, üblicherweise als eine lineare Spule. Dabei können die einzelnen Drähte einzeln übereinander gestapelt sein, oder auch ineinander verwoben sein, wie dies in der Literaturstelle
[1] DE 10 2017 104 932 A1

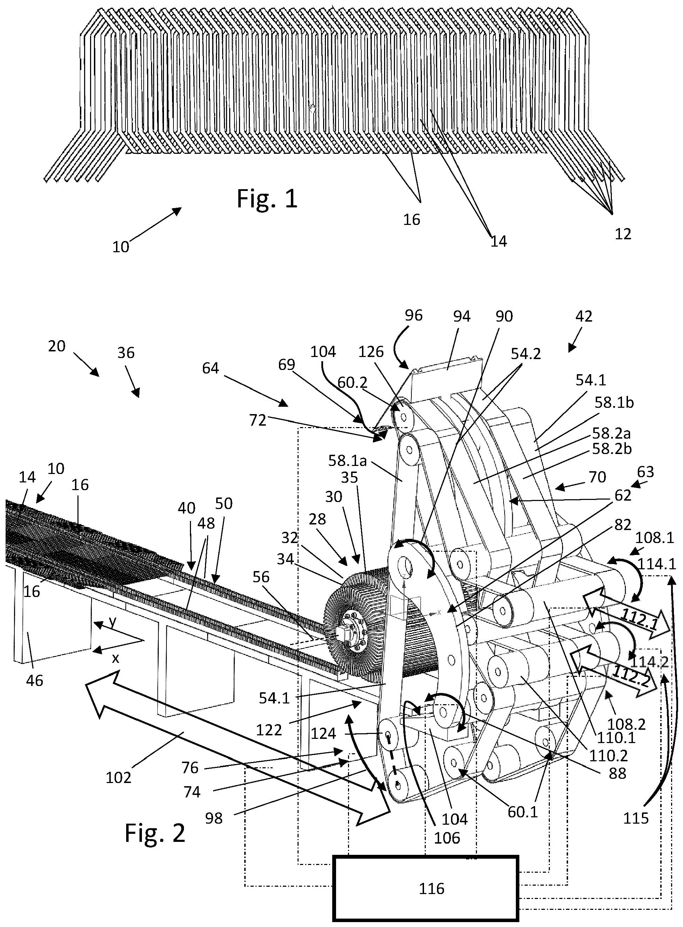

beschrieben und gezeigt ist. Diese lineare Spule kann verschiedene Kopfausbildungen besitzen. Solch eine lineare Spule wird auch oft Spulenmatte oder einfach nur Drahtmatte genannt. Im Folgenden wird für eine solche lineare Spule der Begriff "Spulenmatte" verwendet. Ein Ausführungsbeispiel für eine solche Spulenmatte ist in Fig. 1 gezeigt.

Eine Spulenmatte 10, wie sie auch bei Ausführungsbeispielen der Erfindung einzusetzen ist, besteht z.B. aus mehreren einzelnen S-förmig gebogenen Leitern 12, insbesondere in Form von Kupferstäben, die jeweils gerade Bereiche 14 aufweisen, welche mit Wickelköpfen 16 verbunden sind. Der gerade Bereich 14 befindet sich später in der Bauteilnut, wie insbesondere Statornut, und im sogenannten Wickelkopf 16 springt der Leiter oder Draht eine entsprechende Anzahl Nuten.

Derartige Spulenmatten und deren Herstellung sind insbesondere aus folgenden Literaturstellen [2] bis [5] bekannt, und es wird für weitere Einzelheiten zu möglichen Ausgestaltungen der Spulenmatten, die in den Ausführungsbeispielen der Erfindung verarbeitet werden, ausdrücklich auf diese Literaturstellen [2] bis [5] Bezug genommen:
[2] WO 2019/020148 A1
[3] WO 2019/101272 A1
[4] WO 2019/166060 A1
[5] WO 2019/166061 A1

Um diese lineare Spule in ein ringförmiges Bauteil einer elektrischen Maschine, wie insbesondere einen zylinderförmigen Stator, mit innenliegenden Nuten einzubringen, wird bei Ausgestaltungen der Erfindung ein Fügeverfahren verwendet, bei dem diese lineare Spule - Spulenmatte 10 - auf ein zylinderförmiges Übertragungswerkzeug - auch Fügewerkzeug oder je nach Ausführung auch Fügedorn genannt - aufgewickelt wird und somit von einer linearförmigen Wicklung in eine rotationsförmige Wicklung überführt wird. Hierbei kann auch die Wicklung mehrere Lagen auf dem Übertragungswerkzeug einnehmen. Es können auch mehre linearen Spulen - Spulenmatten 10 - übereinander gelegt und aufgewickelt werden. Es können auch mehrere einzelne lineare Teilmatten gleichzeitig auf ein Fügewerkzeug aufgewickelt werden, deren Anfang an der gleichen Stelle oder auch an unterschiedlichen Stellen sein kann -z.B. bei spiralförmig eingebrachten Teilspulen. Das Fügewerkzeug oder Übertragungswerkzeug (auch Fügedorn genannt) wird anschließend in das vorbereitete Bauteil, insbesondere Stator, eingetaucht, und die Wicklung wird vom Fügewerkzeug in das Bauteil durch eine vorwiegend radiale Bewegung der einzelnen Drahtabschnitte übertragen. Die radiale Übertragung kann für alle Drahtabschnitte gleichzeitig oder auch abschnittsweise oder nacheinander erfolgen. Hierbei hat vorzugsweise das Fügewerkzeug gleich viele Nuten an der gleichen Stelle wie das Bauteil. Vorzugsweise wird das jeweils lineare Teilstück -gerader Bereich 14 - des Drahtes oder Leiters 12, welches sich in der Nut des Fügewerkzeuges befindet, und in die Bauteilnut überführt werden soll, entsprechend eng vom Fügewerkzeug geführt, um den Leiter ohne Beschädigung - z.B. einer Isolierschicht - in die eng tolerierten Nuten zu überführen.

Bei bisherigen in der Praxis eingesetzten Herstellverfahren erfolgt folgende Prozessabfolge:
i) Herstellen der linearen Spulenmatte 10 wie in einer der Literaturstellen [2] bis [5] beschrieben;
ii) Ausrichten der Spulenmatte 10 durch ein lineares Übertragungs- oder Haltewerkzeug - im Folgenden auch Halteeinrichtung genannt;
iii) Übertragen der Spulenmatte auf ein rotatorisches Fügewerkzeug, welches eine Anordnung radial nach außen offener Nuten aufweist, wie dies in den folgenden Literaturstellen [6] oder [7] beschrieben und gezeigt ist;
iv) gegebenenfalls Komprimieren der Wicklung oder Spulenmatte 10 auf den Innendurchmesser des Fügewerkzeugs mit einzelnen oder mehreren Pressfingern;
v) Eintauchen des rotatorischen Fügewerkzeugs mit der Spulenmatte 10 (Wicklung) in das ringförmige Bauteil, wie insbesondere Stator(blechpaket),
vi) Übertragen der Spulenmatte 10 in das Bauteil, wie insbesondere Stator.

Ausführungsbeispiele und Einzelheiten von Schritten des vorgenannten Verfahrens finden sich in den folgenden Literaturstellen:
[6] WO 2017/102892 A2
[7] frühere internationale Patentanmeldung PCT/DE2020/100194
[8] frühere deutsche Patentanmeldung 10 2019 106 711.1, angemeldet am 15.03.2019

Ausgestaltungen der Erfindung befassen sich mit Verbesserungen der Schritte iii) und iv). Im Folgenden werden Nachteile oder Herausforderungen bisheriger Verfahren hinsichtlich der Schritte iii) und iv) erläutert.

Bezüglich Schritt iii) Übertragen:
- Die Spulenmatte sollte während des Aufrollens im Fügedorn vor dem Herausfallen gesichert werden;
- Beim Sichern mit Gleitelementen entsteht eine Relativbewegung zwischen Führung und Draht bzw. Leiter, was zu Beschädigungen führen kann;
- Bei einem radial verstellbaren Fügedorn muss der Durchmesser der Führung ständig angepasst werden.

Bezüglich Schritt iv) Komprimieren:
- bisherige Verfahren komprimieren durch Pressen mit Werkzeugen von außen, welche nutweise in radialer Richtung nach innen drücken;
- die Verfahren sind abhängig von Daten des Bauteils, wie z.B. Statordaten (Nutzahl, Durchmesser, Drahtbreite, Blechpaketlänge), wodurch hohe Werkzeugkosten entstehen;
- um das Risiko von Beschädigungen gering zu halten sollten alle drahtberührenden Teile poliert sein;
- der Draht muss zwischen Übertragen und dem Anfang des Komprimierens gesichert werden, z.B. gegen Veränderung der Position.

Zum weiteren Stand der Technik wird auf die folgenden Literaturstellen verwiesen:
[9] US 2019/356188 A1
[10] US 2014/0196 282 A1
[11] EP 1 639 688 A1
[12] US 2010/0000077 A1
[13] WO 2006/110498 A1
[14] EP 3 731 373 A1
[15] WO 2017/153502 A1
[16] US 2004/0261885 A1

Aus [9] ist es bekannt, einen Hairpinkranz aus einzelnen Hairpins (haarnadelförmig geformten Einzeldrähten) zusammenzusetzen. Bei einem Hairpinkranz sind nur auf einer Seite Wickelköpfe vorhanden, während auf der anderen Seite freie Drahtenden vorstehen, die nach Einfügen in den Stator in Radialrichtung und in Umfangsrichtung umgebogen und einzeln verschweißt werden, um die Einzeldrähte zu einer Spulenwicklung zu verbinden. Das Verfahren unterscheidet sich grundsätzlich von dem hier in Rede stehenden Verfahren der Vorfertigung von Spulenmatten und Einsetzen derselben in das Bauteil. In [9] wird ein Transportsystem beschrieben, um die einzelnen Pins auf einen Dorn zu übertragen, um so den Hairpinkranz zu bilden. Es geht bei der [9] also um Herstellen einer Vorstufe der Spulenwicklung - die erst im Bauteil fertig gestellt wird - und nicht um Übertragen oder Einfügen einer vorher fertig hergestellten Spulenmatte in das Bauteil.

Aus [10] sind ein Verfahren und eine Vorrichtung zum Übertragen von elektrischen Leitern auf ein Hilfswerkzeug bekannt. Die Vorrichtung weist relativ zueinander bewegbare Segmente auf.

Aus [11] sind ein Verfahren und eine Vorrichtung zum Fügen einer Wellenwicklung in einen Stator bekannt. Die Wellenwicklung wird mittels einer Überführungsschräge oder Rampe von einer linearen Halteeinrichtung in eine Anordnung aus radial offenen Nuten an einem Fügewerkzeug gepresst.

Generell besteht bei den aus [10] und [11] bekannten Verfahren eine große Reibung zwischen den Werkzeugen und den Leitern der Wellenwicklung. Dies kann zu Beschädigungen der Leiter führen.

Aus [12] sind ein Verfahren und eine Vorrichtung zum Aufrollen einer Spulenmatte zu einem aufgerollten Spulenwicklungskörper bekannt, auf den dann einzelne Segmente eines Statorblechpakets aufgesteckt werden können, um so den Stator mit Wicklung zu erhalten. Die Spulenmatte ist aus Leitern mit geraden Bereichen und Wicklungsköpfen dazwischen gebildet. Die Spulenmatte wird in einen aus einzelnen drehbar aneinander gelenkten Gliedern gebildeten Ausrichtkörper eingefügt und mit diesem um eine glatte zylindrische Oberfläche eines Wicklungskerns gewickelt. Dabei hat der Ausrichtkörper an seinen beiden Seiten Vorsprünge, die in Zahnradausbildungen an den axialen Enden des Wicklungskerns eingreifen. Ein Zahnriemen kann zusätzlich vorgesehen sein, der mit seinen Zähnen formschlüssig in äußere Nuten des Ausrichtkörpers eingreift und diesen an dem Wicklungskern hält.

Aus [13] ist ein Verfahren und eine Vorrichtung zum Versehen eines Stators mit Wicklungen bekannt, wobei ein mäandrierender Leiter zum Bilden einer Wicklung z.B. aus einem Blech durch Stanzen gebildet wird. Der Leiter kann auf einen Dorn aufgebracht werden und dort mit einem äußeren Dornwerkzeugsegment fixiert werden. Das äußere Dornwerkzeugsegment kann als Kette oder als Bandsegment ausgebildet sein.

Aus [14] sind ein Verfahren und eine Vorrichtung bekannt, bei der ein Statorblechpaket aus inneren und äußeren Zähnen gebildet wird, die ineinandergesteckt werden. Die inneren Zähne werden bereits in einer geradlinig positionierten Spulenmatte, die aus Leitern mit geraden Bereichen und Wicklungsköpfen dazwischen gebildet ist, bereitgestellt und zusammen mit der Spulenmatte auf eine Wickeltrommel aufgerollt, die äußere Flansche mit zylindrischen Oberflächen aufweisen, welche bereits den Innendurchmesser der Spulenwicklung in dem Stator definieren. Die Wickeltrommel weist Aufnahmen für die innere Zähne auf. Die Spulenmatte wird durch zwei umschlungene Bänder mit konstanter Zugspannung auf diesen Oberflächen gehalten. Beim Aufwickeln werden die inneren Zähne werden durch einen äußeren Schieber und einen inneren Schieber radial bewegt, und die äußeren Zähne werden beim Aufwickeln einzeln eingesetzt. Die Spulenmatte hat beim Aufwickeln stets die gleiche radiale Position, wie sie sie später in dem Stator einnimmt.

Aus [15] ist ein weiteres Verfahren zum Einsetzen einer durch Schwertwicklung gebildeten Spulenmatte in ein Blechpaket bekannt.

Aus [16] ist ein Spulenmattenaufnahmeverfahren bekannt, bei dem die Spulenmatte durch Rampen in ein Fügewerkzeug mit nach außen öffnenden Nuten gedrückt wird.

Die Erfindung hat sich zur Aufgabe gestellt, Verfahren und Vorrichtungen zur Handhabung von Spulenmatten im Zuge des Einfügens der Spulenmatte in ein Bauteil einer elektrischen Maschine zur Verfügung zu stellen, mit denen eine Übertragung der Spulenmatte sehr schonend erfolgen kann und die in einfacherer Weise bei unterschiedlichen Bauteilgrößen einsetzbar sind.

Zum Lösen dieser Aufgabe schafft die Erfindung die Verfahren und Vorrichtungen gemäß den unabhängigen Ansprüchen.

Vorteilhafte Ausgestaltungen sind Gegenstand der Unteransprüche.

Die Erfindung schafft gemäß einem ersten Aspekt ein im Zuge der Herstellung eines Bauteils einer elektrischen Maschine durchzuführendes Spulenmattenaufnahmeverfahren zum Einfügen einer Spulenmatte in eine ringförmige Anordnung radial nach außen öffnender Nuten, umfassend Aufrollen der Spulenmatte auf die ringförmige Anordnung und Ausüben eines radialen Drucks auf die Spulenmatte mittels wenigstens eines um die Spulenmatte geschlungenen flexiblen Bandes.

Es ist bevorzugt, dass ein erstes und ein zweites flexibles Band an axial versetzten Bereichen um die Spulenmatte geschlungen werden.

Es ist erfindungsgemäß vorgesehen, dass die Spulenmatte mittels des wenigstens einen flexiblen Bands komprimiert wird.

Es ist erfindungsgemäß vorgesehen, dass das Ausüben radialen Drucks durch Erhöhen der Zugspannung auf das wenigstens eine um die Spulenmatte geschlungene flexible Band erfolgt.

Es ist weiter erfindungsgemäß vorgesehen, dass der radiale Druck auf die Spulenmatte mittels Einstellens einer Zugspannung auf das wenigstens eine um die Spulenmatte geschlungene flexible Band gesteuert wird.

Es ist bevorzugt, dass die Spulenmatte in mehreren Lagen auf die Anordnung gerollt wird.

Es ist bevorzugt, dass ein Innendurchmesser eines Hebelarmmechanismus, mit dem das wenigstens eine flexible Band um die Anordnung herum geführt wird, beim Aufrollen verändert wird.

Es ist bevorzugt, dass ein erstes Ende der Schlinge, mit dem das flexible Band um die Anordnung geschlungen ist, mittels einer ersten Bandführung geführt ist und ein zweites Ende der Schlinge mit einer zweite Bandführung geführt wird, wobei die erste und die zweite Bandführung zum Komprimieren der Spulenmatte relativ aufeinander zu bewegt werden, um die Schlinge um einen größeren Umschlingungswinkel um die Anordnung herum zu schließen.

Es ist bevorzugt, dass nach einem Komprimieren der Spulenmatte auf einen gewünschten Durchmesser die Zugspannung des wenigstens einen flexiblen Bands reduziert wird, insbesondere auf einen Minimalwert reduziert wird.

Es ist bevorzugt, dass das wenigstens eine flexible Band an einem Hebelarmmechanismus geführt wird, der zum Aufnehmen der Anordnung in eine erste Stellung gebracht wird, zum Aufrollen und/oder Komprimieren in eine zweite Stellung gebracht wird, in der der Hebelarmmechanismus und das daran geführte wenigstens eine Band um die Anordnung geschlungen wird, und zum Entnehmen der Anordnung mit der eingefügten Spulenmatte in die erste Stellung gebracht wird.

Es ist bevorzugt, dass zum Komprimieren wenigstens ein erstes flexibles Band in einer ersten Schlinge um die Anordnung geschlungen wird und ein zweites flexibles Band um die Anordnung geschlungen wird, so dass Öffnungsbereiche der Schlingen in Umfangsrichtung versetzt sind und am gesamten Umfang der Anordnung wenigstens eines des ersten und des zweiten Bandes an der Anordnung anliegt.

Es ist bevorzugt, dass die Anordnung zum Aufwickeln an einer Überführungsschräge entlang gedreht wird und zum Komprimieren von der Überführungsschräge entfernt wird, um das wenigstens eine flexible Band weiter um die Anordnung zu schlingen.

Es ist bevorzugt, dass das wenigstens eine flexible Band zum Umschlingen zunächst aufgespannt wird und dann relativ zu der um die Anordnung geschlungenen Spulenmatte in einer radialen Richtung bewegt wird, um es um die Spulenmatte unter Spannung zu wickeln.

Es ist bevorzugt, dass die Spulenmatte mittels des flexiblen Bandes um die Anordnung aufgerollt wird.

Es ist bevorzugt, dass das wenigstens eine flexible Band durch wenigstens einen Riemen oder mehrere Riemen gebildet wird, der oder die in seiner/ihrer Längsrichtung bewegt werden.

Es ist bevorzugt, dass das wenigstens eine flexible Band auf Rollen längsbeweglich geführt wird.

Es ist bevorzugt, dass die Spulenmatte mittels mehrerer erster Riemen auf die Anordnung aufgerollt wird und mittels wenigstens eines zweiten Riemens, der einen kleineren oder gleichen Umschlingungswinkel als die ersten Riemen aufweist, oder mittels der ersten und des wenigstens einen zweiten Riemens komprimiert wird.

Es ist bevorzugt, dass die Spulenmatte auf ein Fügewerkzeug, das zum Einfügen der Spulenmatte in ein Bauteil einer elektrischen Maschine ausgebildet ist und die ringförmige Anordnung radial nach außen öffnende Nuten aufweist, aufgebracht wird.

Gemäß einem weiteren Aspekt betrifft die Erfindung ein im Zuge der Herstellung eines Bauteils einer elektrischen Maschine durchzuführendes Fügeverfahren zum Einfügen einer Spulenmatte in ein ringförmiges Gehäuse des Bauteils der elektrischen Maschine, welches mit radial nach innen öffnenden Nuten zur Aufnahme einer durch die Spulenmatte zu bildenden Spulenwicklung versehen ist, umfassend:
Durchführen des Spulenmattenaufnahmeverfahrens nach einer der voranstehenden Ausgestaltungen zum Aufnehmen der Spulenmatte auf ein Fügewerkzeug, das die ringförmige Anordnung radial nach außen öffnende Nuten aufweist, Einfügen des Fügewerkzeugs in das ringförmige Gehäuse und
Überführen der Spulenmatte von dem Fügewerkzeug in das Gehäuse.

Vorzugsweise umfasst das Fügeverfahren den Schritt:
radiales Ausrichten der Nuten von Fügewerkzeug und Gehäuse.

Vorzugsweise umfasst das Fügeverfahren den Schritt:
Festhalten und Lösen der Spulenmatte in dem Fügewerkzeug mittels radial bewegbarer Segmente, die die Nuten des Fügewerkzeugs begrenzen.

Vorzugsweise umfasst das Fügeverfahren den Schritt:
Festhalten der vor dem Einfügen des Fügewerkzeugs komprimierten Spulenmatte in dem Fügewerkzeug mittels Formschluss und/oder Kraftschluss in den Nuten des Fügewerkzeugs.

Gemäß einem weiteren Aspekt schafft die Erfindung eine Spannvorrichtung zum Einfügen einer Spulenmatte in eine ringförmige Anordnung radial nach außen öffnender Nuten umfassend eine Rolleinrichtung zum Aufrollen der Spulenmatte auf die ringförmige Anordnung und wenigstens ein flexibles Band zum Umschlingen der auf der ringförmigen Anordnung aufgerollten Spulenmatte, um einen radialen Druck auf die Spulenmatte auszuüben.

Es ist bevorzugt, dass wenigstens ein erstes flexibles Band und ein zweites flexibles Band zum Umschlingen der Spulenmatte an axial versetzten Bereichen vorgesehen ist.

Es ist bevorzugt, dass die Spannvorrichtung eine Aufspanneinrichtung zum Aufspannen des flexiblen Bandes aufweist.

Es ist bevorzugt, dass die Spannvorrichtung eine Relativbewegungseinheit zum relativen Bewegen des aufgespannten flexiblen Bandes und der Anordnung aufweist, um das aufgespannte Band um die Anordnung zu schlingen.

Es ist bevorzugt, dass die Spannvorrichtung einen Bandspanner aufweist, um die Zugspannung des wenigstens einen Bandes zu steuern.

Es ist bevorzugt, dass das wenigstens eine flexible Band durch wenigstens einen Riemen gebildet ist, der auf Rollen in seiner Längsrichtung bewegbar ist.

Es ist bevorzugt, dass das wenigstens eine flexible Band durch an einer ersten Riemenführung geführte mehrere erste Riemen und wenigstens einen an einer zweiten Riemenführung geführten zweiten Riemen gebildet ist, wobei die zweite Riemenführung dazu ausgebildet ist, den wenigstens einen zweiten Riemen um ein kleineres oder gleiches Ausmaß um die Anordnung zu schlingen als die erstem Riemen.

Es ist bevorzugt, dass die Rolleinrichtung mehrere erste Riemen aufweist.

Es ist bevorzugt, dass die Spulenmatte mittels wenigstens eines zweiten Riemens komprimierbar oder mittels erster Riemen und wenigstens eines zweiten Riemens komprimierbar ist.

Es ist bevorzugt, dass die Spannvorrichtung eine Riemenbewegungseinrichtung zum Bewegen wenigstens eines als flexibles Band eingesetzten Riemens in Erstreckungsrichtung des Riemens aufweist.

Es ist bevorzugt, dass die Rolleinrichtung einen Bewegungsmechanismus zum geradlinigen Bewegen der Spannvorrichtung während des Aufrollens aufweist.

Es ist bevorzugt, dass die Rolleinrichtung ein Lager zum drehbaren Lagern der Anordnung radial nach außen öffnender Nuten aufweist.

Es ist bevorzugt, dass die Rolleinrichtung eine oder mehrere Rampenführungen zum Überführen der Spulenmatte beim Aufrollen auf die Anordnung und/oder zum Führen eines aufgerollten Bereichs der Spulenmatte an der Anordnung aufweist.

Der Riemen kann zum Aufnehmen der Spulenmatte aktiv angetrieben werden oder nicht. Bei einigen Ausgestaltungen ist daher ein Riemenantrieb zum aktiven Antreiben vorgesehen. Insbesondere ist wenigstens eine der Rollen als Antriebsrolle mit einem Rollenantrieb verbunden, um den Riemen aktiv anzutreiben. Bei anderen Ausgestaltungen sind alle Rollen frei drehbar, und eine Bewegung der Riemen erfolgt durch passives Antreiben beim Aufnehmen oder Spannen. Eine aktive Förderung durch einen angetriebenen Riemen ist insbesondere vorteilhaft und wird daher bevorzugt.

Vorzugsweise umfasst die Spannvorrichtung einen Hebelarmmechanismus, der in einer ersten Stellung das wenigstens eine flexible Band aufspannt und in einer zweiten Stellung um die Anordnung herum anordenbar ist, um das wenigstens eine flexible Band um die Anordnung zu schlingen.

Es ist bevorzugt, dass der Hebelarmmechanismus einen an einem ersten Ende schwenkbar gelagerten ersten Gabelarm und einen an einem anderen Ende des ersten Gabelarms schwenkbar angelenkten zweiten Gabelarm aufweist, wobei das wenigstens eine Band an dem ersten Gabelarm und dem zweiten Gabelarm gelagert ist, um das Band um die Anordnung zu schlingen.

Es ist bevorzugt, dass im Bereich von Gelenken des Hebelarmmechanismus Rollen zum Führen des Bandes vorgesehen sind.

Es ist bevorzugt, dass an einem freien Ende des Hebelarmmechanismus ein Niederhalter zum Niederhalten eines noch aufzurollenden Bereichs der Spulenmatte während des Aufrollens angelenkt ist.

Es ist bevorzugt, dass eine Steuerung vorgesehen ist, die dazu ausgebildet ist, einen Innendurchmesser des Hebelarmmechanismus in der zweiten Stellung abhängig von einem sich beim Aufrollen ändernden Außendurchmesser der Spulenmatte zu verändern.

Erfindungsgemäß ist eine Steuerung vorgesehen, die dazu ausgebildet ist, die Spannvorrichtung zum Durchführen des erfindungsgemäßen Spulenmattenaufnahmeverfahrens anzusteuern. Vorzugsweise ist die Steuerung dazu ausgebildet, die Spannvorrichtung zum Durchführen des Spulenmattenaufnahmeverfahrens nach einer der vorangestellten Ausgestaltungen anzusteuern.

Vorzugsweise ist die Spannvorrichtung gemäß einer der voranstehenden Ausgestaltungen zum Durchführen des Spulenmattenaufnahmeverfahrens gemäß einer der voranstehenden Ausgestaltungen ausgebildet. Vorzugsweise ist das Spulenmattenaufnahmeverfahren zum Durchführen mittels der Spannvorrichtung gemäß einer der voranstehenden Ausgestaltungen ausgebildet.

Gemäß einem weiteren Aspekt schafft die Erfindung eine Fügevorrichtung zum Einfügen einer Spulenmatte in ein ringförmiges Gehäuse eines Bauteils einer elektrischen Maschine, umfassend eine Spannvorrichtung nach einer der voranstehenden Ausgestaltungen und ein Fügewerkzeug mit der Anordnung radial nach außen öffnender Nuten, wobei das Fügewerkzeug zum Einfügen der Spulenmatte in das ringförmige Gehäuse ausgebildet ist.

Es ist bevorzugt, dass eine Halteeinrichtung zum Halten der Spulenmatte und eine Fügewerkzeuglagerung zum Rollen des Fügewerkzeugs über die Halteeinrichtung und eine Relativbewegungseinrichtung zum relativen linearen Bewegen der Halteeinrichtung und der Fügewerkzeuglagerung vorgesehen sind.

Es ist bevorzugt, dass das Fügewerkzeug mit radial beweglichen Segmenten, die die Nuten des Fügewerkzeugs begrenzen, ausgestattet ist.

Vorzugsweise ist die Fügevorrichtung zum Durchführen des Fügeverfahrens nach einer der voranstehenden Ausgestaltungen ausgebildet. Vorzugsweise ist das Fügeverfahren derart ausgebildet, dass es auf einer Fügevorrichtung nach einer der voranstehenden Ausgestaltungen durchführbar ist. Vorzugsweise weist die Fügevorrichtung eine Steuerung auf, die die Fügevorrichtung zum Durchführen des Fügeverfahrens ansteuert. Die Steuerungen der Spannvorrichtung und der Fügevorrichtung können einzeln ausgeführt und miteinander verbunden oder in einer gemeinsamen Steuerung implementiert sein.

Ausgestaltungen der Erfindung betreffen insbesondere das Übertragen und Komprimieren einer Wickelmatte. Insbesondere wird ein Verfahren zum Herstellen einer Spulenwicklung in einem Bauteil einer elektrischen Maschine mit den oben genannten Schritten i) bis vi) durchgeführt, wobei die Schritte iii) und iv) die Schritte des Verfahrens gemäß einer Ausgestaltung der Erfindung beinhalten bzw. mit den Ausgestaltungen der erfindungsgemäßen Vorrichtungen durchzuführen sind.

Vorteile einiger Ausführungsformen der Verfahren und Vorrichtungen der Erfindung sind:
Beim Aufnehmen der Spulenmatte auf eine Anordnung radial nach außen öffnender Nuten, wie insbesondere einem Fügedorn, wird die Spulenmatte durch das flexible Band vor dem Herausfallen schonend, ohne Relativbewegung mit den Leitern, gesichert. Auch wenn ein radial verstellbarer Fügedorn, wie er beispielsweise in [6] bis [8] beschrieben und gezeigt ist, verwendet wird, braucht die Spannvorrichtung nicht angepasst zu werden, die Anpassung an unterschiedliche Radien des Fügewerkzeug erfolgt durch das umschlingende flexible Band. Das Komprimieren erfolgt ebenfalls mit flexiblem Band und kann somit unabhängig von der Anzahl der Nuten und dem Durchmesser von Fügewerkzeug und Bauteil erfolgen. Das Angreifen an der Spulenmatte erfolgt mit dem flexiblen Band sehr schonend. Man braucht keine polierten Oberflächen an drahtberührenden Flächen wie bisher. Der Übergang zwischen Aufnahme der Spulenmatte und Komprimierung kann fließend bei umschlungenem Band erfolgen. Dieses sichert gleichzeitig die Spulenmatte gegen ein Herausfallen.

Bei den Ausgestaltungen der Erfindung wird eine Spulenwicklung in Form einer Spulenmatte bereits vollständig zusammengebaut der Spannvorrichtung bzw. der Fügevorrichtung zugeführt. Bei besonders bevorzugten Ausgestaltungen wird eine vollständige Umschlingung erreicht, besonders bevorzugt wird auch eine Umschlingung um mehr als 360° erreicht. Die Spulenmatte lässt sich so am gesamten Umfang sichern, aufnehmen und komprimieren. Somit lässt sich ein Komprimieren auch besonders schonend durchführen.

Bevorzugte Ausgestaltungen der Spannvorrichtung können als eine Art Kompressionspresse für Wicklungen dienen.

Relativreibungen zwischen Draht und Spannvorrichtungen lassen sich weitgehend verringern oder vermeiden. Es ist eine komplette Komprimierung am gesamten Umfang gleichzeitig möglich. Zum Fügen kann ein radial verstellbarer Dorn als Fügewerkzeug verwendet werden. Bei Veränderung des Radius am Dorn, z.B. zum Festhalten der geradlinigen Bereiche der komprimierten Spulenmatte, passt sich die Spannvorrichtung an.

Bevorzugte Ausgestaltungen der Erfindung ermöglichen einen möglichst schonenden Prozess ohne Relativbewegung zwischen Werkzeug und Draht zum Übertragen und Komprimieren einer Wickelmatte in einen Fügedorn. Außerdem braucht der Prozess außer dem Dorn keine Bauteil-spezifischen Werkzeuge enthalten. Dadurch wird die Flexibilität gesteigert.

Besonders bevorzugte Ausgestaltungen der Erfindung haben insbesondere folgende Vorteile:
- Vorteilhafte Ausgestaltungen der Verfahren zeichnen sich dadurch aus, dass sie unabhängig von Blechpaketdurchmesser, Drahtbreite und Nutanzahl sind.
- Die Maschine kann so aufgebaut werden, dass keine Relativbewegungen beim Übertragen/ Komprimieren zwischen Werkzeug und Draht entstehen.
- Das Komprimierwerkzeug muss bisher im Stand der Technik meist aufwendig poliert und vergütet werden und ist entsprechend teuer in der Herstellung. Durch das neue Verfahren entfallen die nutspezifischen Komprimierwerkzeuge.
- Viel Rollreibung im Prozess, somit entsprechend effizient.
- die beiden Prozesse Aufrollen + Komprimieren werden kombiniert. Somit gibt es keine Handlings-Schwierigkeiten zwischen den Prozessen.

Das Spulenmattenaufnahmeverfahren und die Spulenmattenspannvorrichtung sind jedoch nicht nur zum Aufbringen von Spulenmatten auf ein Fügewerkzeug geeignet, sie lassen sich auch für andere Anordnungen nach außen öffnender Nuten einsetzen. Zum Beispiel sind das Spulenmattenaufnahmeverfahren und die Spulenmattenspannvorrichtung auch zum unmittelbaren Aufbringen einer Spulenmatte in nach außen offene Statornuten eines Stators eines Außenläufermotors geeignet. Während ein Stator bei einem Innenläufermotor nach innen offene Statornuten hat, in die die Spulenmatte wie oben beschrieben mittels eines Fügewerkzeugs eingefügt wird, hat ein Stator eines Außenläufermotors z.B. nach außen offene Statornuten, in die die Spulenmatte unmittelbar mittels des Spulenmattenaufnahmeverfahrens und der Spulenmattenspannvorrichtung eingefügt werden kann. Zum Beispiel wird die Spulenmatte direkt auf dem Stator (fertiges Produkt) komprimiert., und der Stator dann in einen Rotor montiert.

Ein Ausführungsbeispiel wird im Folgenden anhand der beigefügten Zeichnungen näher erläutert. Darin zeigt:
- Fig. 1: eine Draufsicht auf ein Ausführungsbeispiel für eine Spulenmatte, welche in ein Bauteil einer elektrischen Maschine einzufügen ist;
- Fig. 2: eine perspektivische Ansicht einer Fügevorrichtung mit einem Fügewerkzeug, das eine ringförmige Anordnung nach außen öffnender Nuten aufweist, mit einer Halteeinrichtung zum Halten einer Spulenmatte und mit einer Spannvorrichtung zum Einfügen der Spulenmatte in eine ringförmige Anordnung nach außen öffnender Nuten, in einer ersten Stellung am Anfang eines Spulenmattenaufnahmeverfahrens;
- Fig. 3: eine weitere perspektivische Ansicht der Fügevorrichtung in der ersten Stellung;
- Fig. 4: eine Seitenansicht der Fügevorrichtung in der ersten Stellung;
- Fig. 5: eine perspektivische Ansicht der Fügevorrichtung in einer zweiten Stellung bei einem zweiten Schritt des Spulenmattenaufnahmeverfahrens;
- Fig. 6: eine weitere perspektivische Ansicht der Fügevorrichtung in der zweiten Stellung;
- Fig. 7: eine Seitenansicht der Fügevorrichtung in der zweiten Stellung;
- Fig. 8: eine Ansicht der Fügevorrichtung wie in Fig. 5 bei einem weiteren Schritt des Spulenmattenaufnahmeverfahrens zu Beginn eines Aufrollens der Spulenmatte auf das Fügewerkzeug;
- Fig. 9: eine Ansicht der Fügevorrichtung wie in Fig. 6 bei dem weiteren Schritt des Spulenmattenaufnahmeverfahrens;
- Fig. 10: eine vergrößerte Seitenansicht der Fügevorrichtung bei dem auch in den Fig. 8 und 9 gezeigten Schritt des Spulenmattenaufnahmeverfahrens;
- Fig. 11: eine perspektivische Ansicht der Fügevorrichtung bei noch einem weiteren Schritt des Spulenmattenaufnahmeverfahrens während des Aufrollens der Spulenmatte auf das Fügewerkzeug;
- Fig. 12: eine Seitenansicht der Fügevorrichtung bei dem in Fig. 11 gezeigten Schritt des Spulenmattenaufnahmeverfahrens;
- Fig. 13: eine perspektivische Ansicht der Fügevorrichtung bei noch einem weiteren Schritt des Spulenmattenaufnahmeverfahrens bei dem die Spulenmatte vollständig auf das Fügewerkzeug aufgerollt ist;
- Fig. 14: eine Seitenansicht der Fügevorrichtung bei dem in Fig. 13 gezeigten Schritt des Spulenmattenaufnahmeverfahrens;
- Fig. 15: eine Seitenansicht der Fügevorrichtung in einer dritten Stellung bei einem auf das Aufrollen der Spulenmatte folgenden Komprimierschritt des Spulenmattenaufnahmeverfahrens, bei dem die Spulenmatte auf dem Fügewerkzeug komprimiert wird;
- Fig. 16: eine perspektivische Ansicht der Fügevorrichtung bei dem in Fig. 15 gezeigten Komprimierschritt des Spulenmattenaufnahmeverfahrens;
- Fig. 17: eine weitere perspektivische Ansicht der Fügevorrichtung bei dem in Fig. 15 gezeigten Komprimierschritt des Spulenmattenaufnahmeverfahrens;
- Fig. 18: noch eine weitere perspektivische Ansicht der Fügevorrichtung bei dem in Fig. 15 gezeigten Komprimierschritt des Spulenmattenaufnahmeverfahrens;
- Fig. 19: eine Seitenansicht der Fügevorrichtung bei einem letzten Schritt des Spulenmattenaufnahmeverfahrens, bei dem die Spannvorrichtung die erste Stellung einnimmt, um das Fügewerkzeug mit der darauf aufgerollten und komprimierten Spulenmatte freizugeben;
- Fig. 20: eine perspektivische Ansicht der Fügevorrichtung bei dem in Fig. 19 gezeigten Schritt;
- Fig. 21: eine perspektivische Ansicht der Spannvorrichtung in der ersten Stellung, die die Spannvorrichtung zum Aufnehmen und Freigeben des Fügewerkzeugs einnimmt, wobei von der Spannvorrichtung nur erste und zweite Bänder in Form von ersten und zweiten Riemen und Rollen zum Führen derselben gezeigt sind;
- Fig. 22: die Riemen und Rollen der Spannvorrichtung wie in Fig. 21, jedoch in der zweiten Stellung, die die Spannvorrichtung beim Aufrollen der Spulenmatte auf das Fügewerkzeug einnimmt;
- Fig. 23: die Riemen und Rollen der Spannvorrichtung wie in Fig. 21 und 22, jedoch in der dritten Stellung, die die Spannvorrichtung beim Komprimieren einnimmt; und
- Fig. 24: eine vergrößerte Ansicht eines Teils des äußeren Umfangsbereichs des Fügewerkzeugs mit der darauf komprimiert gehaltenen Spulenmatte bei einem auf das Spulenmattenaufnahmeverfahren folgenden Einfügen der Spulenmatte in ein ringförmiges Bauteil einer elektrischen Maschine.

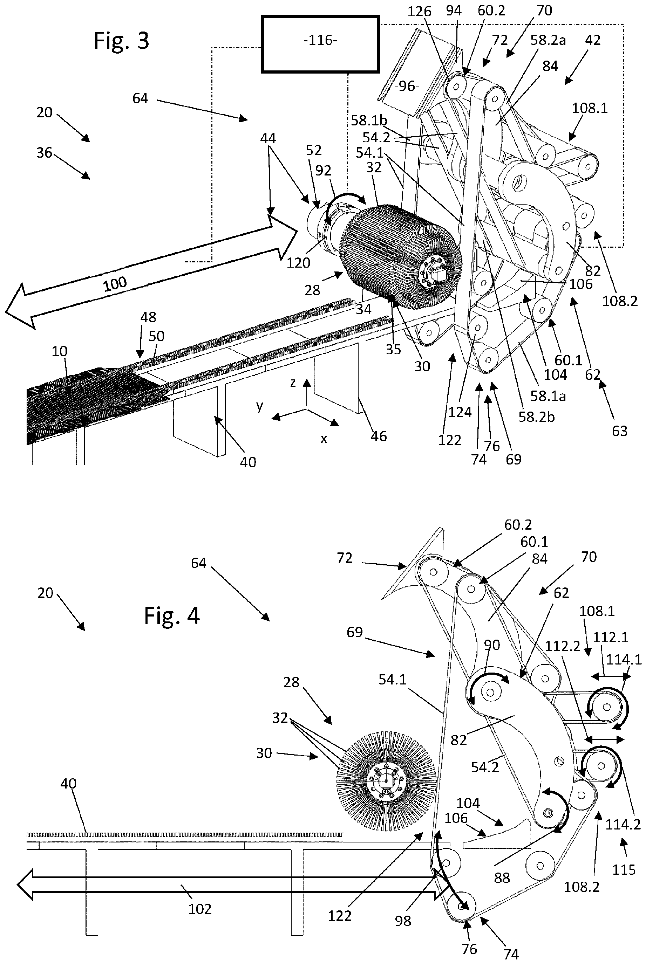

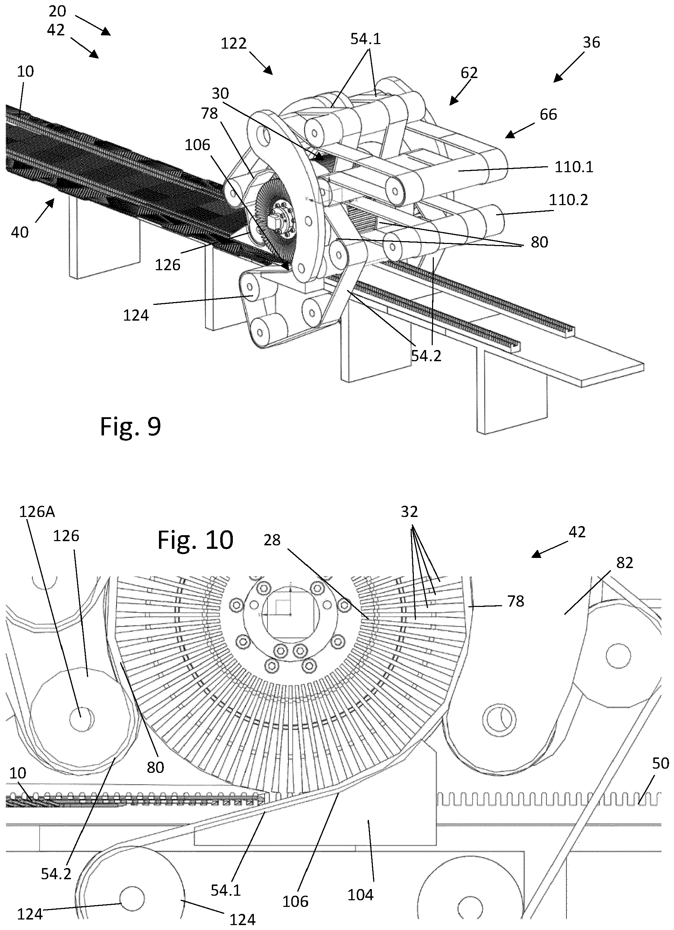

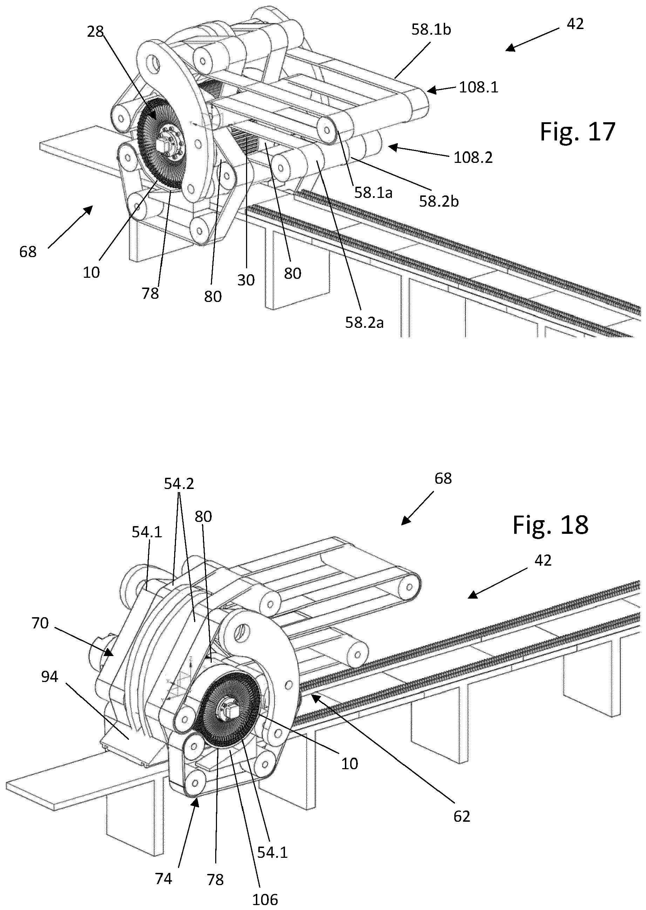

Fig. 1 zeigt schematisch eine Spulenmatte 10. In den Fig. 2 - 24 ist eine Fügevorrichtung 20 zum Einfügen einer solchen Spulenmatte 10 in ein ringförmiges Gehäuse 22 eines Bauteils 24 einer elektrischen Maschine dargestellt.

Das Bauteil 24 ist bspw. ein Stator der elektrischen Maschine. Bei anderen Ausgestaltungen ist das Bauteil ein Rotor der elektrischen Maschine oder ein sonstiges Bauteil, in dem eine Spulenmatte 10 zur Bildung einer Spulenwickelung in einer Anordnung nach innen öffnender Bauteilnuten 26 eingefügt werden soll.

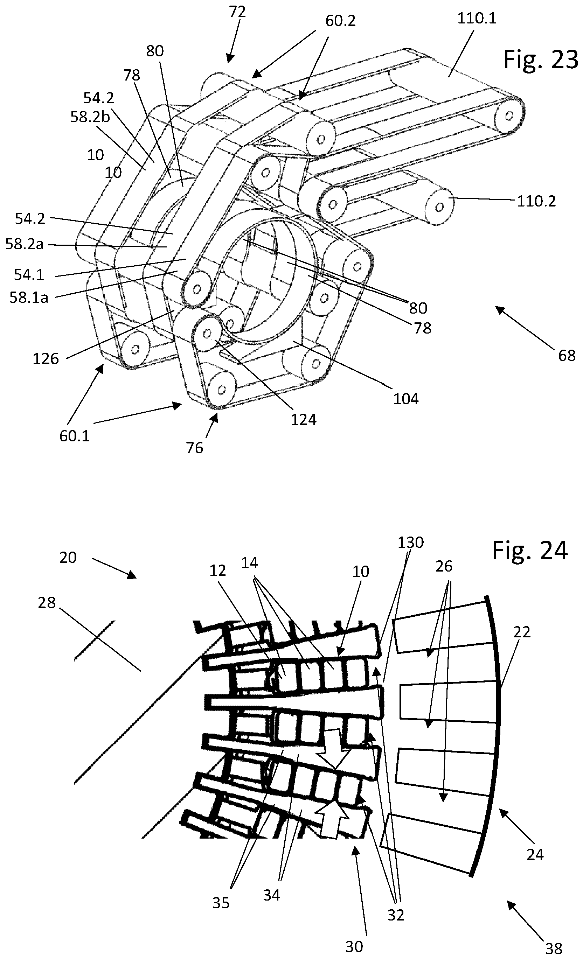

In Fig. 24 ist ein Teil des Gehäuses 22 mit einem Teil der Anordnung der Bauteilnuten 26 stark schematisch dargestellt. Das Gehäuse 22 ist bspw. ein Blechpaket des Stators. Das Gehäuse 22 ist ringförmig ausgebildet und weist die Anordnung radial nach innen öffnender Bauteilnuten 26 auf. Die Spulenmatte 10 ist eine Spulenmatte gemäß Fig. 1, wie sie eingangs beschrieben worden ist oder vorzugsweise eine Spulenmatte 10, wie sie aus den Literaturstellen [2] - [5] bekannt ist. Die Spulenmatte 10 ist, wie dies aus den Literaturstellen [2] - [5] bekannt ist, zuvor aus den einzelnen S-förmig gebogenen Leitern 12 in Form von Kupferstäben mit rechteckigem Querschnitt derart gebildet worden, dass jeweils die geraden Bereiche 14 mit Wickelköpfen 16 verbunden sind. Die jeweiligen geraden Bereiche 14 sind mittels der Fügevorrichtung 20 in einem Fügeverfahren in die einzelnen Bauteilnuten, wie insbesondere Statornuten, einzufügen. Das Fügeverfahren weist ein Spulenmattenaufnahmeverfahren, in dem die Spulenmatte 10 auf ein Fügewerkzeug 28 aufgerollt und komprimiert wird, und einen in Fig. 24 angedeuteten und grundsätzlich aus den Literaturstellen [6] bis [8] bekannten Fügeschritt auf.

Hierzu weist die Fügevorrichtung 20 das Fügewerkzeug 28 auf, welches als Fügedorn ausgebildet ist und entsprechend abhängig von dem Gehäuse 22 derart ausgebildet ist, dass es an seinem Umfang eine Anordnung 30 nach außen öffnender Nuten 32 aufweist. Das Fügewerkzeug 28 ist derart ausgebildet, wie dies in den Literaturstellen [6] - [8] beschrieben und gezeigt ist. Demnach sind die Nuten 32 des Fügewerkzeuges 28 jeweils durch radial bewegliche Schieber 34, beispielsweise in Form von radial beweglichen Segmenten 35, begrenzt, die in einer Aufnahmestellung radial nach außen gefahren werden können und in einer Komprimierstellung radial nach innen gefahren werden können.

Mit den Schiebern 34 in der Aufnahmestellung wird in einer in den Fig. 2 - 23 gezeigten Aufwickelstation der Fügevorrichtung 20 die Spulenmatte 10 auf das Fügewerkzeug 28 derart gewickelt, dass jeweils die geraden Bereiche 14 in die Nuten 32 eingefügt werden. Bei den dargestellten Ausführungsformen erfolgt noch in der Aufwickelstation 36 ein Komprimieren der aufgerollten Spulenmatte 10 auf dem Fügewerkzeug 28, wobei die radial beweglichen Schieber 34 in die Komprimierstellung radial nach innen eingefahren werden. Somit wird das Fügewerkzeug 28 mit der komprimierten Spulenmatte 10 dann von der Aufwickelstation 36 zu einer in Fig. 24 angedeuteten Fügestation 38 überführt, wo das Gehäuse 22 bereit gestellt wird. Das Fügewerkzeug 28 wird axial in das Gehäuse 22 eingeführt, die Nuten 32 des Fügewerkzeugs 28 werden mit den Bauteilnuten 26 ausgerichtet, und anschließend erfolgt das Überführen der Spulenmatte 10 von dem Fügewerkzeug 28 in das Gehäuse 22 des Bauteils 24, wie dies bereits grundsätzlich in den Literarturstellen [6] - [8] beschrieben und gezeigt ist.

Im Folgenden wird das Aufwickeln und Komprimieren der Spulenmatte 10 auf das Fügewerkzeug 28 in der Aufwickelstation 36 anhand der Fig. 2 - 23 näher erläutert.

Die Fig. 2 - 4 zeigen dabei einen ersten Schritt eines Spulenmattenaufnahmeverfahrens, mit dem die Spulenmatte 10 auf das Fügewerkzeug 28 aufgerollt und komprimiert wird.

Wie die Fig. 2 - 4 zeigen, weist die Aufwickelstation 36 der Fügevorrichtung 20 eine Halteeinrichtung 40, eine Spannvorrichtung 42 und eine Fügewerkzeughandhabungseinrichtung 44 auf.

Die Halteeinrichtung 40 erstreckt sich länglich in einer linearen Richtung - im Folgenden y-Richtung - und weist auf einem Trägergestell 46 eine sich linear erstreckende Aufnahme 48 für die Spulenmatte 10 auf.

Die Aufnahme 48 weist z. B. eine erste und eine zweite längliche Kammstruktur 50 mit einer Reihe von nach oben gerichteten Zähnen auf, auf der die Spulenmatte 10 formschlüssig und reibschlüssig und somit exakt positioniert aufgenommen ist.

Die lediglich schematisch, z.T. durch Pfeile angedeutete Fügewerkzeughandhabungseinrichtung 44 weist eine Dornschnittstelle 52 auf, an der das als Fügedorn mit radial beweglichen Schiebern 34 ausgebildete Fügewerkzeug 28 derart angekoppelt ist, dass es in y-Richtung linear über die Halteeinrichtung 40 bewegbar und um eine in die weitere horizontale Richtung - x-Richtung - verlaufende Drehachse drehbar ist.

Insbesondere weist die Fügewerkzeughandhabungseinrichtung 44 eine Relativbewegungseinrichtung 100 zum relativen Bewegen von Fügewerkzeug 28 und Halteeinrichtung 40 in der linearen y-Richtung und eine Fügewerkzeuglagerung 120 zum Drehen des Fügewerkzeuges 28 um seine in y-Richtung ausgerichtete Mittelachse 56 auf. Die Fügewerkzeughandhabungseinrichtung 44 kann z. B. einen Roboterarm oder einen in x-Richtung verfahrbaren Wagen oder Schlitten oder dergleichen aufweisen.

Die Fügewerkzeughandhabungseinrichtung 44 ist vorzugsweise derart ausgebildet, dass das Fügewerkzeug 28 nach Durchführen des Spulenmattenaufnahmeverfahrens von der Aufwickelstation 36 zu der Fügestation 38 überführbar ist und dort axial in das Gehäuse 22 zum Fügen der Spulenmatte 10 in das Gehäuse 22 überführbar ist.

Die Dornschnittstelle 52 ist derart ausgebildet, dass sie ein nicht näher dargestelltes Betätigungselement zum Betätigen der radial beweglichen Schieber 34 aufweist.

Wie die Fig. 2 - 4 zeigen, sind die radial beweglichen Schieber 34 zunächst nach radial außen ausgefahren und somit in der Aufnahmestellung.

Die Spannvorrichtung 42 ist zum Auspannen und zum Umschlingen wenigstens eines flexiblen Bandes 54.1, 54.2 um die Anordnung 30 radial nach außen öffnender Nuten 32 ausgebildet, mit dem die Spulenmatte 10 auf dieser Anordnung 30 aufgewickelt wird und mit dem Radialkräfte auf die Spulmatte 10 zum Komprimieren derselben ausgeübt werden. Bei den dargestellten Ausführungsformen sind mehrere flexible Bänder 54.1, 54.2 vorgesehen, die in axialen Abstand relativ zu der Mittelachse 56 des Fügewerkzeugs 28 angeordnet sind.

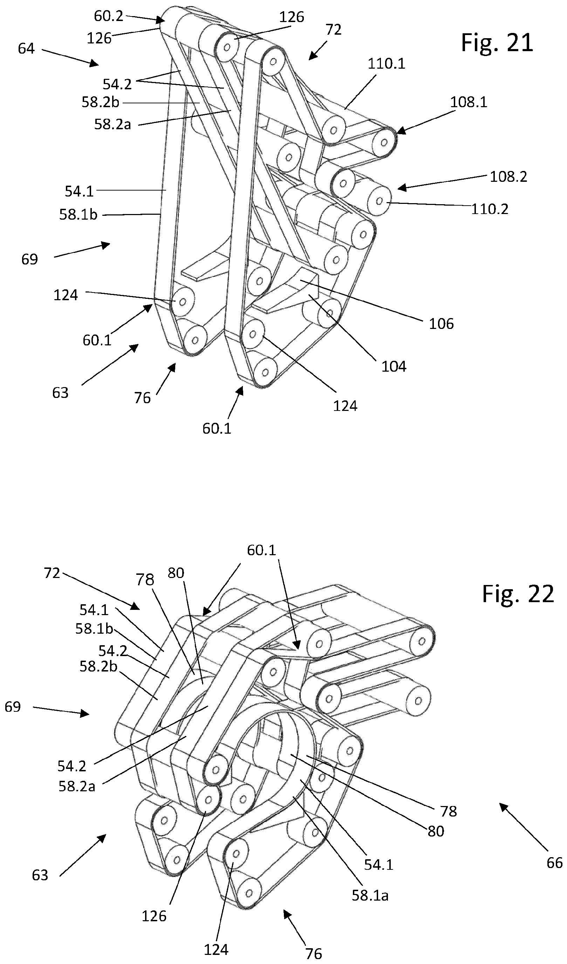

Die flexiblen Bänder 54.1, 54.2 sind insbesondere als ringförmig geschlossene Riemen 58.1 a, 58.1b, 58.2a, 58.2b ausgebildet, wobei ein Paar erster Riemen 58.1a, 58.1b an einer ersten Riemenführung 60.1 mit entsprechenden Rollen auf einer umlaufenden Bahn geführt sind und ein Paar zweiter Riemen 58.2a, 58.2b auf einer zweiten Riemenführung 60.2 mit entsprechenden Rollen umlaufend geführt sind. Die Riemen 58.1a, 58.1b, 58.2a, 58.2b mit den Riemenführungen 60.1, 60.2 sind alleine in unterschiedlichen Stellungen 64, 66, 68 der Spannvorrichtung 42 in den Fig. 21 - 23 dargestellt.

Zum Aufspannen des wenigstens einen flexiblen Bandes 54.1, 54.2 weist die Spannvorrichtung 42 eine Aufspanneinrichtung 69 in Form eines Hebelarmmechanismus 62 auf, der in eine erste Stellung 64, eine zweite Stellung 66 und in eine dritte Stellung 68 bewegbar ist.

Der Hebelarmmechanismus 62 weist eine obere Zuführeinrichtung 70, die als eine erste Bandführung 72 dient, und eine untere Zuführeinrichtung 74, die als eine zweite Bandführung 76 dient, auf.

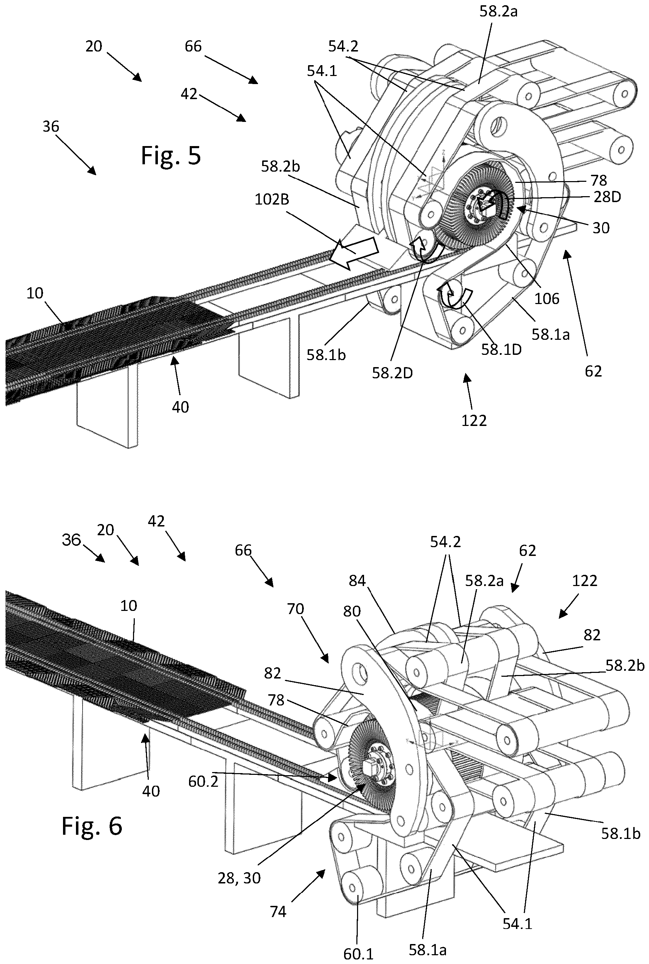

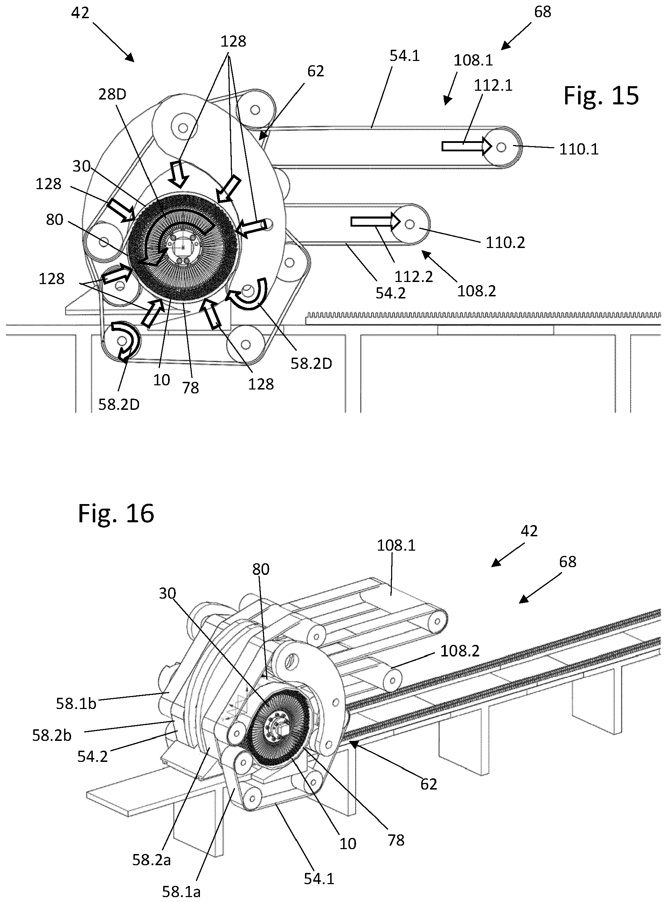

Die Zuführeinrichtungen 70, 74 sind relativ zueinander aufeinander zu und voneinander wegbewegbar, sodass die Bandführungen 72, 76 aufeinander zu und voneinander webbewegbar sind, um so in der ersten Stellung 64, die in den Fig. 2 bis 4 und Fig. 19 bis 21 gezeigt ist, unter Auspannen der Riemen 58.1a, 58.1b, 58.2a, 58.2b ein Einführen und Aufnehmen des Fügewerkzeugs 28 oder auch ein Entnehmen des Fügewerkzeugs 28 zu ermöglichen, in der zweiten Stellung 66, die in den Fig. 5 - 14 und Fig. 22 gezeigt ist, das Fügewerkzeug 28 und die daran ausgebildeten ringförmigen Anordnung 30 von nach radial außen öffnenden Nuten 32 mit durch die ersten Riemen 58.1a, 58.1b gebildeten ersten Schlingen 78 und mit durch die zweiten Riemen 58.2a, 58.2b gebildeten zweiten Schlingen 80 zu umschlingen und die Spulenmatte 10 auf die Anordnung 30 aufzurollen und in der dritten Stellung 68, die in den Fig. 15 - 18 und in Fig. 23 gezeigt ist, den Innendurchmesser des Hebelarmmechanismus 62 weiter zu verringern und durch Erhöhung der Zugspannung auf die Riemen 58.1a, 58.1b, 58.2a, 58.2b den Radialdruck auf die Spulenmatte 10 zu erhöhen, um so die Spulenmatte 10 zu komprimieren.

Die obere Zuführeinrichtung 70 weist einen ersten Gabelarm 82 und einen zweiten Gabelarm 84 auf.

Der erste Gabelarm 82 ist an einer nicht näher dargestellten Basis der Spannvorrichtung 52 schwenkbar angelenkt und lässt sich mit einem ersten Schwenkantrieb 88 um eine in x-Richtung gerichtete erste Schwenkachse schwenken. Der zweite Gabelarm 84 ist an dem anderen Ende des ersten Gabelarms 82 schwenkbar angelenkt und lässt sich mittels eines zweiten Schwenkantriebs 90 um eine ebenfalls in x-Richtung gerichtete zweite Schwenkachse schwenken.

Am Ende des zweiten Gabelarms 84 ist ein Niederhalter 94 angelenkt. Der Niederhalter 94 weist eine Auflagefläche 96 auf, die auf der Oberfläche der Spulenmatte 10 aufliegen kann und den noch aufzuwickelnden Bereich der Spulenmatte 10 beim Aufwickeln auf der Halteeinrichtung 40 hält.

Ein zum Inneren des Hebelarmmechanismus 62, d. h. im Betrieb zu dem Fügewerkzeug 28, das in dem Hebelarmmechanismus 62 aufgenommen ist, hin gerichtete Fläche des Niederhalters 94, dient als Rampenführung 104 und ist gekrümmt ausgebildet, um eine bereits auf dem Fügewerkzeug 28 aufgewickelte Lage der Spulenmatte 10 zu führen.

Im Bereich der Enden und Gelenke der oberen Zuführeinrichtung 70 sind jeweils Rollen der Riemenführungen 60.1, 60.2 drehbar gelagert.

Die untere Zuführeinrichtung 74 weist einen hier nicht näher dargestellten Gabelarm oder ein sonstiges schwenkbares oder verschiebbares Basiselement auf, um die untere Zuführeinrichtung 74 mit entsprechenden Rollen näher zu dem aufgenommenen Fügewerkzeug 28 hin zu führen und so die Schlinge 78 zumindest eines der flexiblen Bänder 54.1, 54.2 weiter um das Fügewerkzeug 28 und genauer um die Anordnung 30 radial nach außen öffnender Nuten 32 herumzuführen.

Die untere Zuführeinrichtung 74 weist einen dritten Schwenkantrieb 98 auf, mit dem diese Bewegung der unteren Zuführeinrichtung 74 angetrieben wird.

Die Schwenkantriebe 88, 90, 98 sind in den Zeichnungen nur durch entsprechend gekrümmte Pfeile dargestellt, sie können auf jede für derartige Schwenkantriebe übliche Art und Weise ausgebildet sein.

Der Hebelarmmechanismus 62 mit den Zuführeinrichtungen 70, 74 bildet eine Relativbewegungseinheit 63 zum relativen Bewegen des aufgespannten wenigstens einen flexiblen Bandes 54.1, 54.2 und der Anordnung 30, um das wenigstens eine Band 54.1, 54.2 um die Anordnung 30 zu schlingen.

Die Spannvorrichtung 42 weist weiter einen Bewegungsmechanismus 102 zum geradlinigen Bewegen der Spannvorrichtung 42 in y-Richtung entlang der Halteeinrichtung 40 auf. Der Bewegungsmechanismus 102 kann durch jede übliche Linearbewegungsmechanismus ausgebildet sein. Beispielsweise kann die Basis der Spannvorrichtung 42 an einem Wagen oder einem Schlitten oder an einem Portalkran oder dergleichen befestigt sein, welche in y-Richtung angetrieben bewegbar sind.

An der Basis befindet sich außerdem eine weitere Rampenführung 104 mit einer Überführungsschräge 106 zum Überführen der Spulenmatte 10 beim Aufrollen auf die Anordnung.

Durch Bewegung der Spannvorrichtung 42 in der zweiten Stellung 66 und Bewegung der flexiblen Bänder 54.1, 54.2 lässt sich über die Rampenführungen 104 die Spulenmatte 10 auf die Anordnung 30 von radial nach außen gerichteten Nuten 32 aufrollen. Der Hebelarmmechanismus 62 mit dem Niederhalter 94 und den Rampenführungen 104 ist somit ein Beispiel für eine Rolleinrichtung 120 zum Aufrollen der Spulenmatte 10 auf die Anordnung 30.

Weiter weist die Spannvorrichtung 42 einen ersten und zweiten Bandspanner 108.1, 108.2 auf, mittels denen die Zugspannung des ersten bzw. zweiten flexiblen Bands 54.1, 54.2, hier entsprechend des Paars erster Riemen 58.1a, 58.1b bzw. des Paars zweiter Riemen 58.2a, 58.2b einstellbar ist.

Jeder der Bandspanner 108.1, 108.2 weist bei dem dargestellten Ausführungsbeispiel eine als Spannrolle wirkende Umlenkrolle 110.1, 110.2, die Teil der jeweiligen Riemenführung 60.1, 60.2 sind und um die jeweils das Paar Riemen 58.1a, 58.1b bzw. 58.2a, 58.2b geführt sind, sowie einen Linearbewegungsantrieb 112.1, 112.2 auf, mittels dem die jeweilige Umlenkrolle 110.1, 110.2 in eine erste Richtung bewegbar ist, um die Zugspannung zu erhöhen und in die entgegengesetzte zweite Richtung bewegbar ist, um die Zugspannung zu erniedrigen.

Weiter weist die Spannvorrichtung 42 zumindest eine Riemenbewegungseinrichtung 115 zum Bewegen mindestens eines der Riemen 58.1a, 58.1b bzw. 58.2a, 58.2b entlang seiner Bewegungsbahn auf. Die Riemenbewegungseinrichtung 115 weist z.B. einen ersten Rollenantrieb 114.1 und einen zweiten Rollenantrieb 114.2 auf. Mit dem ersten Rollenantrieb 114.1 ist wenigstens eine Rolle der ersten Riemenführung 60.1 drehend antreibbar. Mit dem zweiten Rollenantrieb 114.2 ist wenigstens eine Rolle der zweiten Riemenführung 60.2 drehend antreibbar. Bei dem Beispiel in Fig. 2 ist die jeweilige Umlenkrolle 110.1, 110.2 motorisch angetrieben. Jedoch kann jede beliebige andere Rolle die jeweiligen Riemenführungen 60.1, 60.2 mittels des Rollenantriebes 114.1, 114.2 angetrieben sein. Bei anderen Ausführungsformen sind die Rollenantriebe 114.1, 114.2 weggelassen, und die Riemen 58.1a, 58.1b, 58.2a, 58.2b sind lediglich passiv in ihrer Längsrichtung auf ihrer Bahn der jeweiligen Riemenführungen 60.1, 60.2 bewegbar, insbesondere sind alle Rollen frei drehbar.

Weiter weist die Fügevorrichtung 20 eine Steuerung 116 zum Steuern der Antriebe 88, 90, 92, 98, 114.1, 114.2, 112.1, 112.2, sowie der anderen Aktoren, insbesondere der Relativbewegungseinrichtung 100 und des Bewegungsmechanismus 112 auf. Die Steuerung 116 weist insbesondere durch Software implementierte maschinenlesbare Anweisungen auf. Auf Grund dieser Anweisung kann die Steuerung 116 die Fügevorrichtung 20 und insbesondere die Spannvorrichtung 42 zum Durchführen des im Folgenden näher erläuterten Spulenmattenaufnahmeverfahrens ansteuern.

Ausgangssituation ist die in den Fig. 2 - 4 gezeigte Stellung. Die Spulenmatte 10 liegt formschlüssig oder bei anderen Ausgestaltungen auch nur kraftschlüssig auf der Aufnahme 48 auf. Ein entsprechend als Fügedorn ausgebildetes Fügewerkzeug 28 wird in der Spannvorrichtung 42 positioniert. Der Fügedorn ist optional radial verstellbar und an der Dornschnittstelle 52 gehalten.

Insbesondere wird in der in Fig. 2 bis 4 gezeigten Ausgangssituation die Spulenmatte 10 auf der Halteeinrichtung 40 gehalten, und die Spannvorrichtung 42 befindet sich in der ersten Stellung 64 und am Anfang der Halteeinrichtung 40. Mittels der Fügewerkzeughandhabungseinrichtung 44 wird das Fügewerkzeug 28 oberhalb der Halteeinrichtung 40 zwischen der Spannvorrichtung 42 und der Spulenmatte 10 angeordnet. Die Spannvorrichtung 42 wird mittels des Bewegungsmechanismus 102 auf das Fügewerkzeug 28 zu bewegt, und der Hebelarmmechanismus 62 wird in die zweite Stellung 66 überführt, um so die Riemen 58.1a, 58.1b, 58.2a, 58.2b unter Bildung der ersten Schlinge 78 und der zweiten Schlinge 80 um die Anordnung 30 herum zu schlingen.

Insbesondere wird der Hebelmechanismus 62 geschlossen, und die Riemen 58.1a, 58.1b, 58.2a, 58.2b umschlingen dabei das Fügewerkzeug 28. Dies führt zu der Situation, wie sie in den Fig. 5 - 7 dargestellt ist. Das Fügewerkzeug 28 ist in der Spannvorrichtung 42 positioniert, der Niederhalter 94 liegt auf der Halteeinrichtung 40 auf, die Überführungsschräge 106 ist zum Überführen der Spulenmatte 10 mit ihrem Vorderende unterhalb der Aufnahme 48 und mit ihrem Hinterende oberhalb der Aufnahme 48 positioniert.

Die Riemen 58.1a, 58.1b, 58.2a, 58.2b werden mit dem Fügewerkzeug 28 in eine Drehbewegung versetzt, die mit der linearen Mattenzuführbewegung des Bewegungsmechanismus 102 synchronisiert ist. Fig. 5 zeigt die Dreh- und Bewegungsrichtungen der Spannvorrichtung 42. Dabei ist die Bewegung des Bewegungsmechanismus 102 mit einem entsprechenden Pfeil 102B dargestellt, die Drehrichtung der ersten Riemen 58.1a, 58.1b ist mit 58.1D bezeichnet, die Drehrichtung des Fügewerkzeugs 28 ist mit 28D bezeichnet.

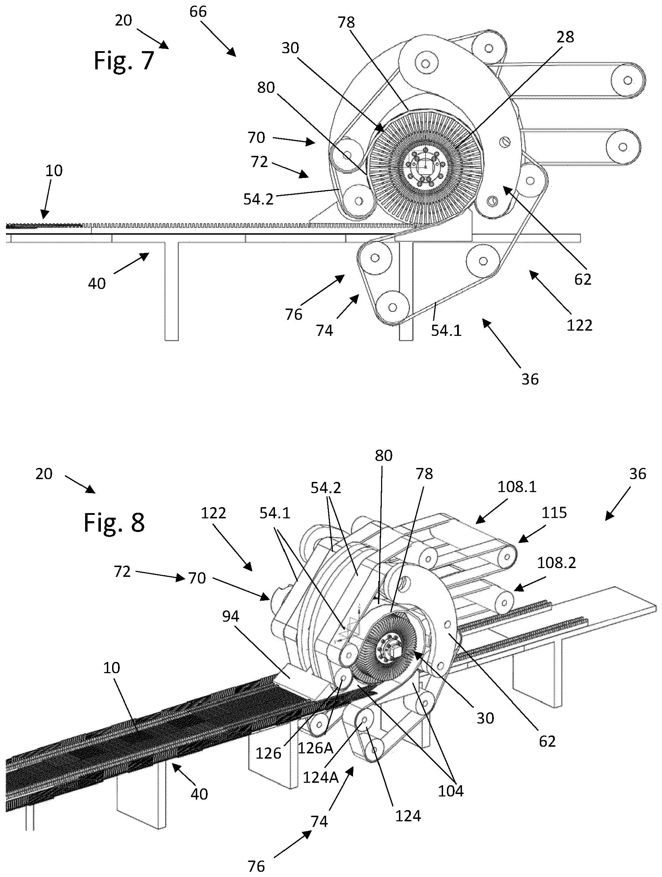

Somit werden die Spannvorrichtung 42 mittels des Bewegungsmechanismus 102 sowie synchron das Fügewerkzeug 28 mittels der durch die Fügewerkzeughandhabungseinrichtung 44 gebildeten Relativbewegungseinrichtung 100 relativ linear zu der Halteeinrichtung 40 in y-Richtung auf die Spulenmatte 10 zu bewegt. Dabei wird das Fügewerkzeug 28 um die Fügewerkzeuglagerung 120 der Fügewerkzeughandhabungseinrichtung 44 um seine Mittelachse 56 gedreht. Dieses Drehen kann durch einen Drehantrieb 92 der Fügewerkzeughandhabungseinrichtung 44, der mit der Linearbewegung und der Bewegung der Riemen 58.1a, 58.1b, 58.2a, 58.2b synchronisiert ist, erfolgen, oder passiv über Angriff der Riemen 58.1a, 58.1b, 58.2a, 58.2b erfolgen. So wird das Fügewerkzeug 28 über die Halteeinrichtung 40 gerollt. Somit ist eine Rolleinrichtung 122 gebildet, mittels der die Spulenmatte 10 auf die Anordnung 30 gerollt werden kann. Das Aufrollen ist in den Fig. 8 - 12 dargestellt.

Wie insbesondere Fig. 8 zeigt, ist beim Aufwickelvorgang ein erstes Rollenpaar 124 am Einführende der unteren Zuführeinrichtung 74 mit seiner Rollenachse 124A in einer unteren Stellung und somit weiter entfernt von einem zweiten Rollenpaar 126 an dem freien Ende des zweiten Gabelarmes 84. An dem ersten Rollenpaar 124 ist das Paar erste Riemen 58.1a, 58.1b geführt, und an dem zweiten Rollenpaar 126 ist das Paar zweite Riemen 58.2a, 58.2b geführt. Die ersten Riemen 58.1a, 58.1b greifen an den Wickelköpfen 16 an, und das axial zwischen dem Paar erste Riemen 58.1a, 58.1b angeordnete Paar zweiter Riemen 58.2a, 58.2b greifen an den geraden Bereichen 14 an. Beim Aufwickeln werden die geraden Bereiche 14 in die Nuten 32 überführt.

Wie aus Fig. 8 bis 12 ersichtlich, wird die Spulenmatte 10 derart aus der Aufnahme 48 entnommen, dass die Spulenmatte 10 durch das Paar erste Riemen 58.1a, 58.1b, welche jeweils über eine der seitlich angeordneten Überführungsschrägen 106 laufen, aufgenommen und der Draht der Spulenmatte 10 wird aus der Halteeinrichtung 40 entnommen. Das Paar erste Riemen 58.1a, 58.1 b übergibt die Spulenmatte 10 auf einen oder mehrere weitere Riemen, hier das Paar zweite Riemen 58.2a, 58.2b, die einen möglichst großen Umschlingungswinkel um das Fügewerkzeug 28 aufweisen.

Nachdem die Spulenmatte 10 eine Umdrehung auf das Fügewerkzeug 28 aufgerollt worden ist, kann an dem Hebelarmmechanismus 62 eine Durchmesseranpassung auf einen größeren Durchmesser erfolgen. Dieser Vorgang wird so lange wiederholt, bis die Spulenmatte 10 komplett aufgerollt ist. Es können aber auch nur einzelne Lagen der Spulenwicklung auf das Fügewerkzeug 28 appliziert und nacheinander gefügt werden. Z.B. kann die Spulenwicklung aus mehreren Spulenmatten 10 der in Fig. 1 gezeigten Art gebildet sein, die einzelne Lagen der Spulenwicklung bilden.

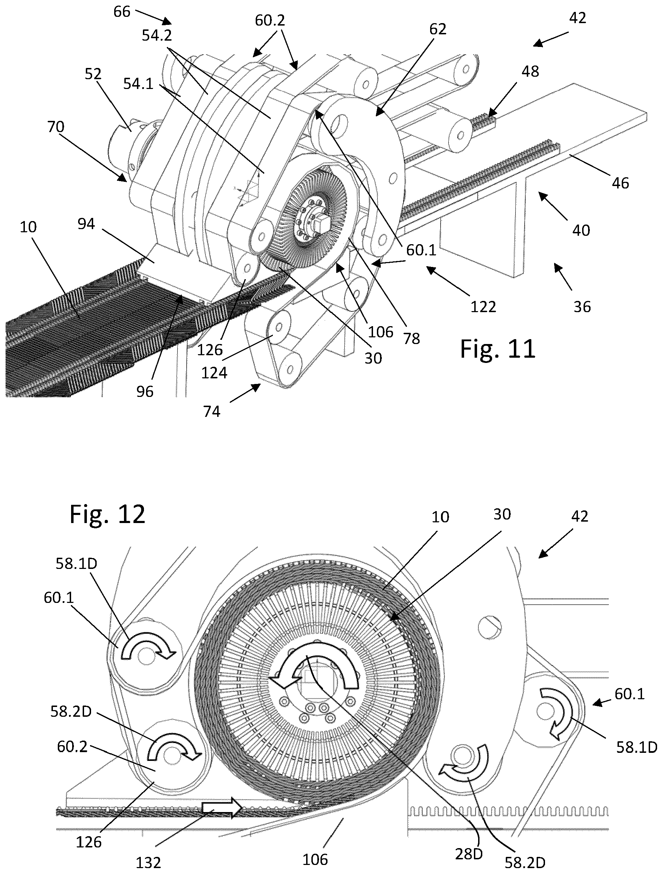

Fig. 12 zeigt die Drehbewegungen und Zuführbewegungen während des Aufrollvorganges. Insbesondere ist die Zuführung 132 der Spulenmatte 10 dargestellt.

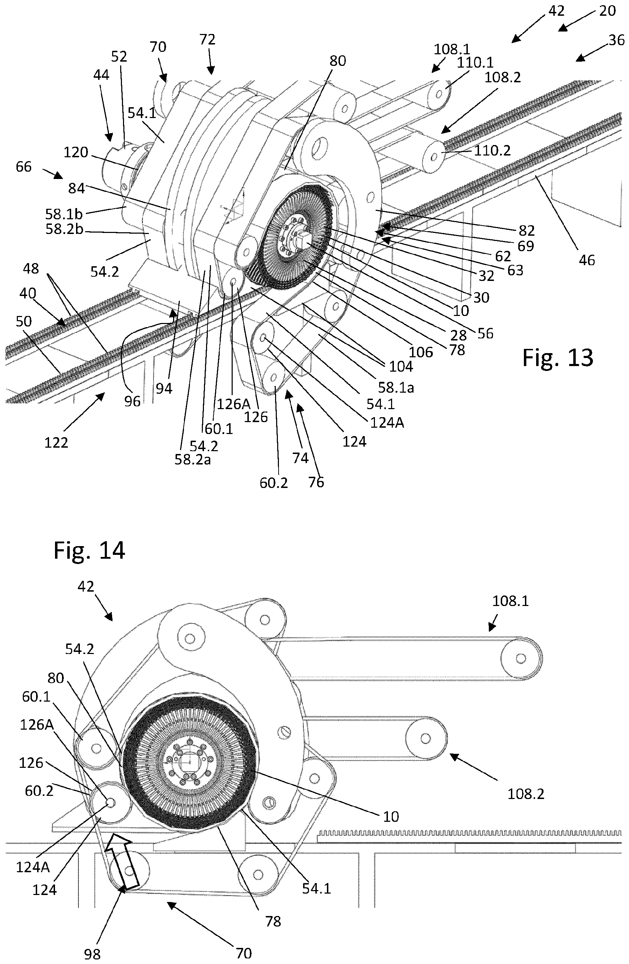

Fig. 13 zeigt die Situation, wo das Aufrollen der Spulenmatte 10 auf die Anordnung gerade beendet ist. Anschließend kann, wie dies in Fig. 14 gezeigt ist, die untere Zuführeinrichtung 74 zum Fügewerkzeug 28 hin zugestellt werden, um einen möglichst großen Umschlingungswinkel zum Komprimieren zu erzielen.

Bei dem dargestellten Ausführungsbeispiel wird dabei die Rollenachse 124A des ersten Rollenpaares 124 in Übereinstimmung mit der Rollenachse 126A des zweiten Rollenpaares 126 gebracht: Ist die Spulenmatte 10 auf das Fügewerkzeug 28 aufgerollt, wird die untere Zuführeinrichtung 74 nach oben geklappt. Dabei klappt das erste Rollenpaar 124 auf die Rollenachse 126A des zweiten Rollenpaars 126 nach oben. Es wird eine komplette Umschlingung des Fügewerkzeugs durch die Riemen 58.1a, 58.1b, 58.2a, 58.2b, und insbesondere eine komplette Umschlingung durch das Paar erste Riemen 58.1a, 58.1b erreicht. Bei anderen Ausführungen wird auf das Zustellen der unteren Zuführeinrichtung verzichtet und direkt komprimiert.

Anschließend wird zum Komprimieren, wie dies in den Fig. 15 bis 18 gezeigt ist, die Zugspannung des wenigstens einen flexiblen Bandes 54.1, 54.2 erhöht, um Radialkräfte 128 auf die Spulenmatte 10 auszuüben.

Bei den Ausführungsbeispielen werden hierzu die Zugspannungen der Riemen 58.1a, 58.1b, 58.2a, 58.2b mittels der Bandspanner 108.1, 108.2 erhöht. Beispielsweise kann dann, wenn das Hochklappen des ersten Rollenpaares 124 erfolgt ist und somit eine zusätzliche Umschlingung erreicht ist, die Riemenspannung erhöht werden. Dies kann beispielsweise durch Zustellung der als Spannrollen wirkenden Umlenkrollen 110.1, 110.2 geschehen. Dadurch nimmt die wirkende Radialkraft 128 auf das Fügewerkzeug 28/die Spulenmatte 10 zu.

Die Riemenspannung wird so lange erhöht, bis ein plastisches Verformen des Drahtes einsetzt. Wird der optional radial verstellbare Fügedorn als Fügewerkzeug eingesetzt, werden gleichzeitig die Schieber 34 radial einwärts gefahren. Außerdem rotiert das Fügewerkzeug 28 und das wenigstens eine flexible Band 54.1, 54.2 mit, um die zusätzlich frei werdende Bandlänge - Länge der Riemen 58.1a, 58.1b, 58.2a, 58.2b - effizient abzuleiten. Dadurch werden Relativbewegungen zwischen dem wenigstens einen flexiblen Band 54.1, 54.2 und den Drähten der Spulenmatte 10 minimiert.

Beim Komprimieren kann es je nach Ausführung der Spulenmatte 10 vorteilhaft sein, die Mittelachse 56 des Fügewerkzeugs 28 nach oben und/oder unten zu bewegen.

Sind die Spulenmatte 10 und das Fügewerkzeug 28 auf einen gewünschten Durchmesser- der kleiner als der Innendurchmesser des Gehäuses 22 ist - komprimiert, kann die Riemenspannung wieder auf ein Minimum reduziert werden.

Wie Fig. 24 zeigt, kann ein Herausspringen der Drähte aus den Nuten 32 dadurch vermieden werden, dass die Drähte durch die radial nach einwärts gefahrenen Schieber 34/Segmente 35 zumindest kraftschlüssig festgehalten werden. Die Segmente 35 können auch an ihren Endbereichen mit Vorsprüngen 130 versehen sein, um bei vollständig eingefahrener Stellung einen Formschluss zu erzielen.

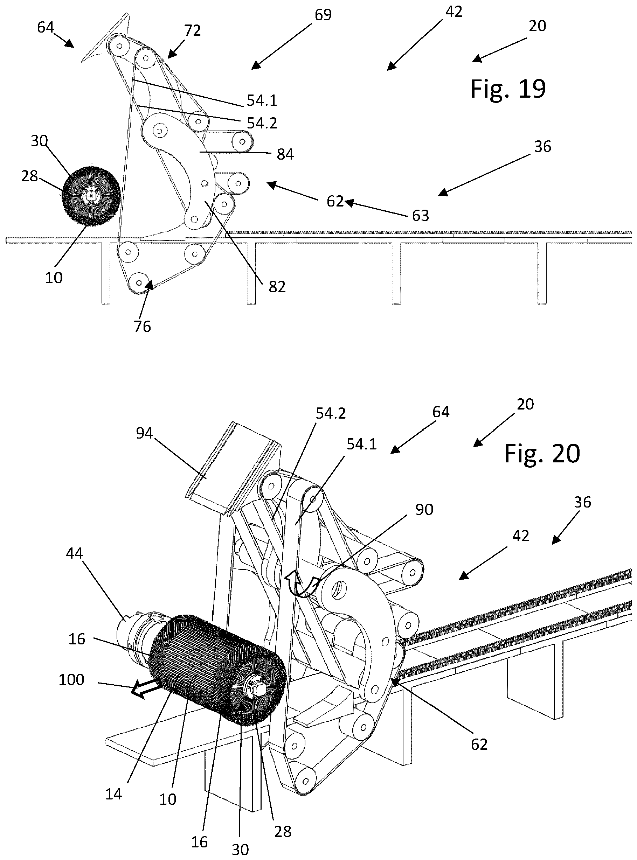

Mit dieser Stellung der Segmente 35/Schieber 34 kann das Formwerkzeug 28 dann aus der Spannvorrichtung 42 mit der aufgerollten und komprimierten Spulenmatte 10 entnommen werden. Hierzu wird, wie dies in den Fig. 19 und 20 dargestellt ist, die Spannvorrichtung 42 wieder in die erste Stellung 64 überführt. Die Riemenumschlingung um das Fügewerkzeug 28 wird so weit reduziert, dass ein Entnehmen des Fügewerkzeugs 28 möglich ist, analog zum Einführen. Das Fügewerkzeug 28 wird zur Fügestation 36 weiter transportiert, wo das bereits eingangs beschriebene Einfügen erfolgt. Die Spannvorrichtung 42 kann in die Anfangsstellung überführt werden.

In den Fig. 20 bis 23 sind die einzelnen Arbeits-Stellungen 64, 66, 68 gezeigt, die die Riemenanordnung während der unterschiedlichen Schritte des Spulenmattenaufnahmeverfahrens annimmt.

Wenngleich das Spulenmattenaufnahmeverfahren anhand der bevorzugten Verwendung im Rahmen des Fügeverfahrens in Zusammenhang mit einem Fügewerkzeug beschrieben worden ist, so ist es auch für andere im Zuge der Herstellung von Spulenwicklungen von elektrischen Bauteilen durchzuführende Verfahren einsetzbar. Die Anordnung 30 nach außen öffnender Nuten 32 könnte z.B. auch an dem Bauteil selbst, z.B. einem Stator eines Außenläufermotors, an einem Ankerteil eines Rotors oder an einem zylindrischen Teil eines Transformators, das mit einer Primär- oder Sekundärwicklung zu versehen ist, angeordnet sein.

Zur Vereinfachung der Herstellung eines Bauteils (24) einer elektrischen Maschine, bei welchem eine vorher vollständig vorgefertigte verteilte Spulenwicklung an dem Bauteil (24) anzubringen ist, ist ein Spulenmattenaufnahmeverfahren zum Einfügen einer Spulenmatte (10) in eine ringförmige Anordnung (30) radial nach außen öffnender Nuten (32) beschrieben worden, wobei das Spulenmattenaufnahmeverfahren Aufrollen der Spulenmatte (10) auf die ringförmige Anordnung (30) und Ausüben eines radialen Drucks auf die Spulenmatte (10) mittels wenigstens eines um die Spulenmatte (10) geschlungenen flexiblen Bandes (54.1, 54.2) umfasst. Weiter sind ein Fügeverfahren, eine Spannvorrichtung (42) zum Durchführen des Spulenmattenaufnahmeverfahrens und eine Fügevorrichtung (20) zum Durchführen des Fügeverfahrens beschrieben worden.

### Bezugszeichenliste:

- 10: Spulenmatte
- 12: Leiter
- 14: gerader Bereich
- 16: Wickelkopf
- 20: Fügevorrichtung
- 22: Gehäuse
- 24: Bauteil
- 26: Bauteilnut
- 28: Fügewerkzeug
- 28D: Drehrichtung Fügewerkzeug
- 30: Anordnung
- 32: Nut
- 34: radial bewegliche Schieber
- 35: radial bewegliche Segmente
- 36: Aufwickelstation
- 38: Fügestation
- 40: Halteeinrichtung
- 42: Spannvorrichtung
- 44: Fügewerkzeughandhabungseinrichtung
- 46: Trägergestell
- 48: Aufnahme
- 50: Kammstruktur
- 52: Dornschnittstelle
- 54.1: erstes flexibles Band
- 54.2: zweites flexibles Band
- 56: Mittelachse
- 58.1a: erster Riemen
- 58.1b: erster Riemen
- 58.1D: Drehrichtung Rollen für erste Riemen
- 58.2a: zweiter Riemen
- 58.2b: zweiter Riemen
- 58.2D: Drehrichtung Rollen für zweite Riemen
- 60.1: erste Riemenführung
- 60.2: zweite Riemenführung
- 62: Hebelarmmechanismus
- 63: Relativbewegungseinheit (Band - Anordnung)
- 64: erste Stellung
- 66: zweite Stellung
- 68: dritte Stellung
- 69: Aufspanneinrichtung zum Aufspannen des flexiblen Bandes
- 70: obere Zuführeinrichtung
- 72: erste Bandführung
- 74: untere Zuführeinrichtung
- 76: zweite Bandführung
- 78: erste Schlinge
- 80: zweite Schlinge
- 82: erster Gabelarm
- 84: zweiter Gabelarm
- 88: erster Schwenkantrieb
- 90: zweiter Schwenkantrieb
- 92: Drehantrieb
- 94: Niederhalter
- 96: Auflagefläche
- 98: dritter Schwenkantrieb
- 100: Relativbewegungseinrichtung (Fügewerkzeug)
- 102: Bewegungsmechanismus (Spannvorrichtung)
- 102B: Bewegungsrichtung des Bewegungsmechanismus
- 104: Rampenführung
- 106: Überführungsschräge
- 108.1: erster Bandspanner
- 108.2: zweiter Bandspanner
- 110.1: erste Umlenkrolle
- 110.2: zweite Umlenkrolle
- 112.1: erster Linearbewegungsantrieb
- 112.2: zweiter Linearbewegungsantrieb
- 114.1: erster Rollenantrieb
- 114.2: zweiter Rollenantrieb
- 115: Riemenbewegungseinrichtung
- 116: Steuerung
- 120: Fügewerkzeuglagerung
- 122: Rolleinrichtung
- 124: erstes Rollenpaar
- 124A: Rollenachse des ersten Rollenpaars
- 126: zweites Rollenpaar
- 126A: Rollenachse des zweiten Rollenpaares
- 128: Radialkraft
- 130: Vorsprung
- 132: Zuführung Spulenmatte

## Patentansprüche

1. Im Zuge der Herstellung eines Bauteils (24) einer elektrischen Maschine durchzuführendes Spulenmattenaufnahmeverfahren zum Einfügen einer Spulenmatte (10) aus mehreren Leitern (12), die jeweils gerade Bereiche (14) aufweisen, welche durch Wickelköpfe (16) miteinander verbunden sind, in eine ringförmige Anordnung (30) radial nach außen öffnender Nuten (32), umfassend:
Aufrollen der Spulenmatte (10) auf die ringförmige Anordnung (30) derart, dass die geraden Bereiche (14) in die Nuten (32) eingefügt werden, und
Komprimieren der aufgerollten Spulenmatte (10) durch Ausüben eines radialen Drucks auf die Spulenmatte (10) mittels wenigstens eines um die Spulenmatte (10) geschlungenen flexiblen Bandes (54.1, 54.2), wobei der radiale Druck auf die Spulenmatte (10) mittels Einstellen einer Zugspannung auf das wenigstens eine um die Spulenmatte (10) geschlungene flexible Band (54.1, 54.2) gesteuert wird, wobei zum Komprimieren ein Erhöhen der Zugspannung auf das wenigstens eine um die Spulenmatte (10) geschlungene flexible Band (54.1, 54.2) erfolgt, um den radialen Druck auf die Spulenmatte (10) auszuüben.

2. Spulenmattenaufnahmeverfahren nach Anspruch 1, **dadurch gekennzeichnet, dass** ein erstes und ein zweites flexibles Band (54.1, 54.2) an axial versetzten Bereichen um die Spulenmatte (10) geschlungen werden.

3. Spulenmattenaufnahmeverfahren nach einem der voranstehenden Ansprüche, **gekennzeichnet durch** wenigstens eines oder mehrere der folgenden Merkmale:
3.1 dass die Spulenmatte (10) in mehreren Lagen auf die Anordnung (30) gerollt wird;
3.2 dass ein Innendurchmesser eines Hebelarmmechanismus (62), mit dem das wenigstens eine flexible Band (54.1, 54.2) um die Anordnung (30) herum geführt wird, beim Aufrollen verändert wird;
3.3 dass ein erstes Ende der Schlinge (78, 80), mit dem das flexible Band (54.1, 54.2) um die Anordnung (30) geschlungen ist, mittels einer ersten Bandführung (72) geführt ist und ein zweites Ende der Schlinge (78, 80) mit einer zweiten Bandführung (76) geführt wird, wobei die erste und die zweite Bandführung (72, 76) zum Komprimieren der Spulenmatte (10) relativ aufeinander zu bewegt werden, um den Umschlingungswinkel, mit dem die Schlinge (78, 80) um die Anordnung (30) herum geschlossen ist, zu vergrößern;
3.4 dass nach einem Komprimieren der Spulenmatte (10) auf einen gewünschten Durchmesser die Zugspannung des wenigstens einen flexiblen Bands (54.1, 54.2) reduziert wird, insbesondere auf einen Minimalwert reduziert wird;
3.5 dass das wenigstens eine flexible Band (54.1, 54.2) an einem Hebelarmmechanismus (62) geführt wird, der zum Aufnehmen der Anordnung (30) in eine erste Stellung (64) gebracht wird, zum Aufrollen und/oder Komprimieren in eine zweite Stellung (66) gebracht wird, in der der Hebelarmmechanismus (62) und das daran geführte wenigstens eine Band (54.1, 54.2) um die Anordnung (30) geschlungen wird, und zum Entnehmen der Anordnung (30) mit der eingefügten Spulenmatte (10) in die erste Stellung (64) gebracht wird;
3.6 dass zum Komprimieren wenigstens ein erstes flexibles Band (54.1) in einer ersten Schlinge (78) um die Anordnung (30) geschlungen wird und ein zweites flexibles Band (54.2) in einer zweiten Schlinge (80) um die Anordnung (30) geschlungen wird, so dass Öffnungsbereiche der Schlingen (78, 80) in Umfangsrichtung versetzt sind und am gesamten Umfang der Anordnung (30) wenigstens eines des ersten und des zweiten Bandes (54.1, 54.2) an der Anordnung (30) anliegt;
3.7 dass die Anordnung (30) zum Aufwickeln an einer Überführungsschräge (106) entlang gedreht wird und zum Komprimieren von der Überführungsschräge (106) entfernt wird, um das wenigstens eine flexible Band (54.1, 54.2) weiter um die Anordnung (30) zu schlingen.

4. Spulenmattenaufnahmeverfahren nach einem der voranstehenden Ansprüche, **dadurch gekennzeichnet,**
a) **dass** das wenigstens eine flexible Band (54.1, 54.2) zum Umschlingen zunächst aufgespannt wird und dann relativ zu der um die Anordnung (30) geschlungenen Spulenmatte (10) in einer radialen Richtung bewegt wird, um es um die Spulenmatte (10) unter Spannung zu wickeln, und/oder
b) **dass** die Spulenmatte (10) mittels des flexiblen Bandes (54.1, 54.2) um die Anordnung (30) aufgerollt wird.

5. Spulenmattenaufnahmeverfahren nach einem der voranstehenden Ansprüche, **dadurch gekennzeichnet**,
5.1 dass das wenigstens eine flexible Band (54.1, 54.2) durch wenigstens einen Riemen (58.1a, 58.1b, 58.2a, 58.2b) oder mehrere Riemen (58.1a, 58.1b, 58.2a, 58.2b) gebildet wird, der oder die in seiner/ihrer Längsrichtung bewegt werden und/oder
5.2 dass das wenigstens eine flexible Band (54.1, 54.2) auf Rollen längsbeweglich geführt wird; und/oder
5.3 dass die Spulenmatte (10) mittels mehrerer erster Riemen (58.1a, 58.1b) auf die Anordnung (30) aufgerollt wird und mittels wenigstens eines zweiten Riemens (58.2a, 58.2b), der einen kleineren oder gleichen Umschlingungswinkel als die ersten Riemen (58.1a, 58.1b) aufweist, oder mittels der ersten und des wenigstens einen zweiten Riemens (58.1a, 58.1b, 58.2a, 58.2b) komprimiert wird.

6. Spulenmattenaufnahmeverfahren nach einem der voranstehenden Ansprüche, **dadurch gekennzeichnet, dass** die Spulenmatte (10) auf ein Fügewerkzeug (28), das zum Einfügen der Spulenmatte (10) in ein Bauteil (24) einer elektrischen Maschine ausgebildet ist und das die ringförmige Anordnung (30) radial nach außen öffnende Nuten (32) aufweist, aufgebracht wird.

7. Im Zuge der Herstellung eines Bauteils (24) einer elektrischen Maschine durchzuführendes Fügeverfahren zum Einfügen einer Spulenmatte (10) in ein ringförmiges Gehäuse (22) des Bauteils (24) der elektrischen Maschine, welches mit radial nach innen öffnenden Nuten (32) zur Aufnahme (48) einer durch die Spulenmatte (10) zu bildenden Spulenwicklung versehen ist, umfassend: Durchführen des Spulenmattenaufnahmeverfahrens nach Anspruch 6, Einfügen des Fügewerkzeugs (28) in das ringförmige Gehäuse (22) und Überführen der Spulenmatte (10) von dem Fügewerkzeug (28) in das Gehäuse (22).

8. Fügeverfahren nach Anspruch 7, **gekennzeichnet durch** wenigstens einen oder mehrere der Schritte:
8.1 radiales Ausrichten der Nuten (32) von Fügewerkzeug (28) und Gehäuse (22),
8.2 Festhalten und Lösen der Spulenmatte () in dem Fügewerkzeug (28) mittels radial bewegbarer Segmente (35), die die Nuten (32) des Fügewerkzeugs (28) begrenzen,
8.3 Festhalten der vor dem Einfügen des Fügewerkzeugs (28) komprimierten Spulenmatte (10) in dem Fügewerkzeug (28) mittels Formschluss und/oder Kraftschluss in den Nuten (32) des Fügewerkzeugs (28).

9. Spannvorrichtung (42) zum Einfügen einer Spulenmatte (10) aus mehreren Leitern (12), die jeweils gerade Bereiche (14) aufweisen, welche durch Wickelköpfe (16) miteinander verbunden sind, in eine ringförmige Anordnung (30) radial nach außen öffnender Nuten (32), umfassend:
eine Rolleinrichtung (122) zum derartigen Aufrollen der Spulenmatte (10) auf die ringförmige Anordnung (30), dass die geraden Bereiche (14) in die Nuten (32) eingefügt werden,
wenigstens ein flexibles Band (54.1, 54.2) zum Umschlingen der auf der ringförmigen Anordnung (30) aufgerollten Spulenmatte (10), um einen radialen Druck auf die Spulenmatte (10) auszuüben, und
eine Steuerung (116), die dazu ausgebildet ist, die Spannvorrichtung (42) anzusteuern zum Aufrollen der Spulenmatte (10) auf die ringförmige Anordnung (30) derart, dass die geraden Bereiche (14) in die Nuten (32) eingefügt werden, und
zum Komprimieren der aufgerollten Spulenmatte (10) durch Ausüben des radialen Drucks auf die Spulenmatte (10) mittels des wenigstens einen um die Spulenmatte (10) geschlungenen flexiblen Bandes (54.1, 54.2), wobei der radiale Druck auf die Spulenmatte (10) mittels Einstellen einer Zugspannung auf das wenigstens eine um die Spulenmatte (10) geschlungene flexible Band (54.1, 54.2) derart gesteuert wird, dass zum Komprimieren ein Erhöhen der Zugspannung auf das wenigstens eine um die Spulenmatte (10) geschlungene flexible Band (54.1, 54.2) erfolgt.

10. Spannvorrichtung (42) nach Anspruch 9, **gekennzeichnet durch** wenigstens eines oder mehrere der folgenden Merkmale:
10.1 dass wenigstens ein erstes flexibles Band (54.1) und ein zweites flexibles Band (54.2) zum Umschlingen der Spulenmatte (10) an axial versetzten Bereichen vorgesehen ist;
10.2 dass die Spannvorrichtung (42) eine Aufspanneinrichtung zum Aufspannen des flexiblen Bandes (69) aufweist;
10.3 dass die Spannvorrichtung (42) eine Relativbewegungseinheit (63) zum relativen Bewegen des aufgespannten flexiblen Bandes (54.1, 54.2) und der Anordnung (30) aufweist, um das aufgespannte Band (54.1, 54.2) um die Anordnung (30) zu schlingen;
10.4 dass die Spannvorrichtung (42) einen Bandspanner (108.1, 108.2) aufweist, um die Zugspannung des wenigstens einen Bandes (54.1, 54.2) zu steuern,
10.5 dass das wenigstens eine flexible Band (54.1, 54.2) **durch** wenigstens einen Riemen (58.1 a, 58.1b, 58.2a, 58.2b) gebildet ist, der auf Rollen in seiner Längsrichtung bewegbar ist,
10.6 dass mehrere flexible Bänder (54.1, 54.2) **durch** an einer ersten Riemenführung (60.1) geführte mehrere erste Riemen (58.1a, 58.1b) und wenigstens einen an einer zweiten Riemenführung (60.2) geführten zweiten Riemen (58.2a, 58.2b) gebildet sind, wobei die zweite Riemenführung (60.2) dazu ausgebildet ist, den wenigstens einen zweiten Riemen (58.2a, 58.2b) um ein kleineres oder gleiches Ausmaß um die Anordnung (30) zu schlingen als die erstem Riemen (58.1a, 58.1b),
10.7 dass die Rolleinrichtung (122) mehrere erste Riemen (58.1a, 58.1b) aufweist;
10.8 dass die Spulenmatte (10) mittels wenigstens eines zweiten Riemens (58.2a, 58.2b) komprimierbar oder mittels erster Riemen (58.1a, 58.1b) und wenigstens eines zweiten Riemens (58.2a, 58.2b) komprimierbar ist;
10.9 dass die Spannvorrichtung (42) eine Riemenbewegungseinrichtung (115) zum Bewegen wenigstens eines als flexibles Band (54.1, 54.2) eingesetzten Riemens (58.1a, 58.1b, 58.2a, 58.2b) in Erstreckungsrichtung des Riemens (58.1a, 58.1b, 58.2a, 58.2b) aufweist;
10.10 dass die Rolleinrichtung (122) einen Bewegungsmechanismus (102) zum geradlinigen Bewegen der Spannvorrichtung (42) während des Aufrollens aufweist;
10.11 dass die Rolleinrichtung (122) eine oder mehrere Rampenführungen (104) zum Überführen der Spulenmatte (10) beim Aufrollen auf die Anordnung (30) und/oder zum Führen eines aufgerollten Bereichs der Spulenmatte (10) an der Anordnung (30) aufweist.

11. Spannvorrichtung (42) nach einem der voranstehenden Ansprüche, **gekennzeichnet durch** einen Hebelarmmechanismus (62), der in einer ersten Stellung (64) das wenigstens eine flexible Band (54.1, 54.2) aufspannt und in einer zweiten Stellung (66) um die Anordnung (30) herum anordenbar ist, um das wenigstens eine flexible Band (54.1, 54.2) um die Anordnung (30) zu schlingen.

12. Spannvorrichtung (42) nach Anspruch 11, **gekennzeichnet durch** wenigstens eines oder mehrere der folgenden Merkmale:
12.1 dass der Hebelarmmechanismus (62) einen an einem ersten Ende schwenkbar gelagerten ersten Gabelarm (82) und einen an einem anderen Ende des ersten Gabelarms (82) schwenkbar angelenkten zweiten Gabelarm (84) aufweist, wobei das wenigstens eine Band (54.1, 54.2) an dem ersten Gabelarm (82) und dem zweiten Gabelarm (84) gelagert ist, um das Band (54.1, 54.2) um die Anordnung (30) zu schlingen;
12.2 dass im Bereich von Gelenken des Hebelarmmechanismus (62) Rollen zum Führen des Bandes (54.1, 54.2) vorgesehen sind;
12.3 dass an einem freien Ende des Hebelarmmechanismus (62) ein Niederhalter (94) zum Niederhalten eines noch aufzurollenden Bereichs der Spulenmatte (10) während des Aufrollens angelenkt ist;
12.4 dass die Steuerung (116) dazu ausgebildet ist, einen Innendurchmesser des Hebelarmmechanismus (62) in der zweiten Stellung (66) abhängig von einem sich beim Aufrollen ändernden Außendurchmesser der Spulenmatte (10) zu verändern;
12.5. dass die Steuerung (116) dazu ausgebildet ist, die Spannvorrichtung (42) zum Durchführen des Spulenmattenaufnahmeverfahrens nach einem der Ansprüche 1 bis 6 anzusteuern.

13. Fügevorrichtung (20) zum Einfügen einer Spulenmatte (10) in ein ringförmiges Gehäuse (22) eines Bauteils (24) einer elektrischen Maschine, umfassend eine Spannvorrichtung (42) nach einem der voranstehenden Ansprüche und ein Fügewerkzeug (28) mit der Anordnung (30) radial nach außen öffnender Nuten (32), wobei das Fügewerkzeug (28) zum Einfügen der Spulenmatte (10) in das ringförmige Gehäuse (22) ausgebildet ist.

14. Fügevorrichtung (20) nach Anspruch 13, **gekennzeichnet durch** eines oder mehrere der folgenden Merkmale:
14.1 dass eine Halteeinrichtung (40) zum Halten der Spulenmatte (10) und eine Fügewerkzeuglagerung (120) zum Rollen des Fügewerkzeugs (28) über die Halteeinrichtung (40) und eine Relativbewegungseinrichtung (100) zum relativen linearen Bewegen der Halteeinrichtung (40) und der Fügewerkzeuglagerung (120) vorgesehen sind;
14.2 dass das Fügewerkzeug (28) mit radial beweglichen Segmenten (35), die die Nuten (32) des Fügewerkzeugs (28) begrenzen, ausgestattet ist.

## Claims

1. Coil mat receiving method to be performed in the course of manufacturing a component (24) of an electric machine for inserting a coil mat (10) of a plurality of conductors (12) each having straight portions (14) interconnected by winding heads (16) into an annular arrangement (30) of radially outwardly opening grooves (32), comprising:
rolling up the coil mat (10) onto the annular arrangement (30) such that the straight portions (14) are inserted into the grooves (32) and
compressing the rolled-up coil mat (10) by exerting a radial pressure on the coil mat (10) by means of at least one flexible band (54.1, 54.2) looped around the coil mat (10), wherein the radial pressure on the coil mat (10) is controlled by adjusting a tension on the at least one flexible band (54.1, 54.2) looped around the coil mat (10), wherein for compression, an increase of the tension on the at least one flexible band (54.1, 54.2) looped around the coil mat (10) is effected in order to exert the radial pressure on the coil mat (10) .

2. Coil mat receiving method according to claim 1, **characterized in that** first and second flexible bands (54.1, 54.2) are looped around the coil mat (10) at axially offset regions.

3. Coil mat receiving method according to any one of the preceding claims, **characterized by** at least one or more of the following features:
3.1 that the coil mat (10) is rolled onto the arrangement (30) in multiple layers;
3.2 that an inner diameter of a lever arm mechanism (62) by which the at least one flexible band (54.1, 54.2) is guided around the arrangement (30) is changed during the rolling-up procedure;
3.3 that a first end of the loop (78, 80) with which the flexible band (54.1, 54. 2) is looped around the arrangement (30) is guided by means of a first band guide (72) and a second end of the loop (78, 80) is guided by means of a second band guide (76), wherein the first and the second band guides (72, 76) are relatively moved towards each other for compressing the coil mat (10) in order to increase the wrap angle with which the loop (78, 80) is closed around the arrangement (30);
3.4 that after compressing the coil mat (10) to a desired diameter the tensile stress of the at least one flexible band (54.1, 54.2) is reduced, in particular reduced to a minimum value;
3.5 that the at least one flexible band (54.1, 54.2) is guided on a lever arm mechanism (62) which is brought into a first position (64) for receiving the arrangement (30), is brought into a second position (66) for rolling up and/or compressing, in which the lever arm mechanism (62) and the at least one band (54. 1, 54.2) is looped around the arrangement (30), and is brought into the first position (64) for removing the arrangement (30) with the inserted coil mat (10));
3.6 that for compression, at least a first flexible band (54.1) is looped around the arrangement (30) in a first loop (78) and a second flexible band (54.2) is looped around the arrangement (30) in a second loop (80), so that opening regions of the loops (78, 80) are offset in the circumferential direction and, on the entire circumference of the arrangement (30), at least one of the first and second bands (54.1, 54.2) is applied against the arrangement (30);
3.7 that the arrangement (30) is rotated along a transfer ramp (106) for winding and is removed from the transfer ramp (106) for compression to further loop the at least one flexible band (54.1, 54.2) around the arrangement (30) .

4. Coil mat receiving method according to any one of the preceding claims, **characterized in**
a) **that** the at least one flexible band (54.1, 54.2) is first stretched for looping and is then moved relative to the coil mat (10) looped around the arrangement (30) in a radial direction to loop it around the coil mat (10) under tension, and/or
b) **that** the coil mat (10) is rolled up around the arrangement (30) by means of the flexible band (54.1, 54.2) .

5. Coil mat receiving method according to any one of the preceding claims, **characterized in**,
5.1 that the at least one flexible band (54.1, 54.2) is formed by at least one belt (58.1a, 58.1b, 58.2a, 58.2b) or a plurality of belts (58.1a, 58.1b, 58.2a, 58.2b) which are moved in their longitudinal direction; and/or
5.2 that the at least one flexible band (54.1, 54.2) is guided for longitudinal movement on rollers; and/or
5.3 that the coil mat (10) is rolled onto the arrangement (30) by means of a plurality of first belts (58.1a, 58.1b) and is compressed by means of at least one second belt (58.2a, 58.2b) having a smaller or the same loop angle than the first belts (58.1a, 58.1b) or by means of the first and the at least one second belt (58.1a, 58.1b, 58.2a, 58.2b).

6. A coil mat receiving method according to any one of the preceding claims, **characterized in that** the coil mat (10) is applied to a joining tool (28) which is designed for inserting the coil mat (10) into a component (24) of an electrical machine and which has the annular arrangement (30) with grooves (32) opening radially outwardly.

7. A joining method to be performed in the course of manufacturing a component (24) of an electrical machine for inserting a coil mat (10) into an annular housing (22) of the component (24) of the electrical machine which is provided with radially inwardly opening grooves (32) for receiving (48) a coil winding to be formed by the coil mat (10), comprising:
performing the coil mat receiving method of claim 6, inserting the joining tool (28) into the annular housing (22), and transferring the coil mat (10) from the joining tool (28) into the housing (22).

8. Joining method according to claim 7, **characterized by** at least one or more of the steps:
8.1 radial alignment of the grooves (32) of the joining tool (28) and the housing (22),
8.2 retaining and releasing the coil mat () in the joining tool (28) by means of radially movable segments (35) which delimit the grooves (32) of the joining tool (28),
8.3 retaining the coil mat (10) compressed before insertion of the joining tool (28) in the joining tool (28) by means of a form fit and/or force fit in the grooves (32) of the joining tool (28).

9. Tensioning device (42) for inserting a coil mat (10) of a plurality of conductors (12) each having straight portions (14) interconnected by winding heads (16) into an annular arrangement (30) of radially outwardly opening grooves (32), comprising:
rolling means (122) for rolling the coil mat (10) onto the annular arrangement (30) such that the straight portions (14) are inserted into the grooves (32),
at least one flexible band (54.1, 54.2) for wrapping around the coil mat (10) rolled up on the annular arrangement (30) to exert a radial pressure on the coil mat (10), and
a controller (116) adapted to control the tensioning device (42) for winding the coil mat (10) onto the annular arrangement (30) such that the straight portions (14) are inserted into the grooves (32), and for compressing the rolled-up coil mat (10) by exerting the radial pressure on the coil mat (10) by means of the at least one flexible band (54.1, 54. 2), wherein the radial pressure on the coil mat (10) is controlled by adjusting a tension exerted on the at least one flexible band (54.1, 54.2) looped around the coil mat (10) in such a way that for compression, an increase of the tension exerted on the at least one flexible band (54.1, 54.2) looped around the coil mat (10) takes place.

10. Tensioning device (42) according to claim 9, **characterized by** at least one or more of the following features:
10.1 that at least a first flexible band (54.1) and a second flexible band (54.2) are provided for being looped around the coil mat (10) at axially offset areas;
10.2 that the tensioning device (42) has an opening device for opening the flexible band (69);
10.3 that the tensioning device (42) comprises a relative movement unit (63) for relatively moving the tensioned flexible band (54.1, 54.2) and the arrangement (30) to loop the tensioned band (54.1, 54.2) around the arrangement (30);
10.4 that the tensioning device (42) comprises a band tensioner (108.1, 108.2) for controlling the tension of the at least one band (54.1, 54.2),
10.5 that the at least one flexible band (54.1, 54.2) is formed by at least one belt (58.1a, 58.1b, 58.2a, 58.2b) movable on rollers in its longitudinal direction,
10.6 that a plurality of flexible bands (54.1, 54.2) is formed by a plurality of first belts (58.1a, 58.1b) guided on a first belt guide (60.1) and at least one second belt (58.2a, 58.2b) guided on a second belt guide (60.2), wherein the second belt guide (60.2) is configured to loop the at least one second belt (58.2a, 58.2b) around the arrangement (30) by an amount smaller than or equal to the first belts (58.1a, 58.1b),
10.7 that the rolling mechanism (122) comprises a plurality of first belts (58.1a, 58.1b);
10.8 that the coil mat (10) is compressible by means of at least one second belt (58.2a, 58.2b) or by means of first belts (58.1a, 58.1b) and at least one second belt (58.2a, 58.2b);
10.9 that the tensioning device (42) has a belt-moving device (115) for moving at least one belt (58.1a, 58.1b, 58.2a, 58.2b) used as a flexible band (54.1, 54.2) in the direction in which the belt (58.1a, 58.1b, 58.2a, 58.2b) extends;
10.10 that the rolling mechanism (122) has a movement mechanism (102) for moving the tensioning device (42) in a straight line during winding;
10.11 that the rolling mechanism (122) comprises one or more ramp guides (104) for transferring the coil mat (10) during rolling onto the arrangement (30) and/or for guiding a rolled-up portion of the coil mat (10) at the arrangement (30).

11. Tensioning device (42) according to any one of the preceding claims, **characterized by** a lever arm mechanism (62) that in a first position (64) opens the at least one flexible band (54.1, 54.2) and in a second position (66) is disposable around the arrangement (30) to loop the at least one flexible band (54.1, 54.2) around the arrangement (30).

12. Tensioning device (42) according to claim 11, **characterized by** at least one or more of the following features:
12.1 that the lever arm mechanism (62) comprises a first fork arm (82) pivotally mounted at one end and a second fork arm (84) pivotally mounted at another end of the first fork arm (82), wherein the at least one band (54.1, 54.2) is mounted on the first fork arm (82) and the second fork arm (84) to loop the band (54.1, 54.2) around the arrangement (30);
12.2 that rollers are provided in the region of joints of the lever arm mechanism (62) for guiding the band (54.1, 54.2);
12.3 that a hold-down device (94) is hinged to a free end of the lever arm mechanism (62) for holding down a region of the coil mat (10) still to be wound up during winding;
12.4 that the controller (116) is adapted to change an inner diameter of the lever arm mechanism (62) in the second position (66) depending on an outer diameter of the coil mat (10) changing during winding;
12.5 that the controller (116) is adapted to control the tensioning device (42) to perform the coil mat receiving method according to any one of claims 1 to 6.

13. Joining device (20) for inserting a coil mat (10) into an annular housing (22) of a component (24) of an electrical machine, comprising a tensioning device (42) according to any one of the preceding claims and a joining tool (28) with the arrangement (30) of radially outwardly opening grooves (32), wherein the joining tool (28) is designed for inserting the coil mat (10) into the annular housing (22).

14. Joining device (20) according to claim 13, **characterized by** one or more of the following features:
14.1 that a holding device (40) for holding the coil mat (10) and a joining tool support (120) for rolling the joining tool (28) over the holding device (40) and a relative displacement device (100) for relative linear movement of the holding device (40) and the joining tool support (120) are provided;
14.2 that the joining tool (28) is provided with radially movable segments (35) which delimit the grooves (32) of the joining tool (28).

## Revendications

1. Procédé de réception de mat de bobines à réaliser au cours de la fabrication d'un composant (24) d'une machine électrique pour insérer un mat de bobines (10) constitué d'une pluralité de conducteurs (12) ayant chacun des parties droites (14) reliées entre elles par des têtes d'enroulement (16) dans un ensemble annulaire (30) de rainures (32) s'ouvrant radialement vers l'extérieur, comprenant les étapes:
d'enroulement du mat de bobines (10) sur l'ensemble annulaire (30) de manière à ce que les parties droites (14) soient insérées dans les rainures (32) et
de compression du mat de bobines (10) enroulé en exerçant une pression radiale sur le mat de bobines (10) au moyen d'au moins une bande flexible (54.1, 54.2) enroulée autour du mat de bobines (10), la pression radiale sur le mat de bobines (10) étant contrôlée en réglant une tension sur ladite au moins une bande flexible (54.1, 54.2) enroulée autour du mat de bobines (10), une augmentation de la tension sur ladite au moins une bande flexible (54.1, 54.2) enroulée autour du mat de bobines (10) étant effectuée pour la compression afin d'exercer la pression radiale sur le mat de bobines (10).

2. Procédé de réception de mat de bobines selon la revendication 1, **caractérisé en ce qu'**une première et une deuxième bande flexible (54.1, 54.2) sont enroulées autour du mat de bobines (10) au niveau de zones décalées axialement.

3. Procédé de réception de mat de bobines selon l'une des revendications précédentes, **caractérisé par** au moins une ou plusieurs des caractéristiques suivantes:
3.1 que le mat de bobines (10) est enroulé en plusieurs couches sur l'ensemble (30);
3.2 qu'un diamètre intérieur d'un mécanisme à bras de levier (62), avec lequel l'au moins une bande flexible (54.1, 54.2) est guidée autour de l'ensemble (30), est modifié lors de l'enroulement;
3.3 qu'une première extrémité de la boucle (78, 80), avec laquelle la bande flexible (54.1, 54.2) est enroulée autour de l'ensemble (30), est guidée au moyen d'un premier guide de bande (72) et une deuxième extrémité de la boucle (78, 80) est guidée au moyen d'un deuxième guide de bande (76), les premier et deuxième guides de bande (72, 76) étant déplacés l'un vers l'autre pour comprimer le mat de bobines (10) afin d'augmenter l'angle d'enroulement avec lequel la boucle (78, 80) est fermée autour de l'ensemble (30);
3.4 qu'après la compression du mat de bobines (10) à un diamètre souhaité, la tension de l'au moins une bande flexible (54.1, 54.2) est réduite, en particulier réduite à une valeur minimale;
3.5 que ladite au moins une bande flexible (54.1, 54.2) est guidée sur un mécanisme à bras de levier (62) qui est amené dans une première position (64) pour recevoir l'ensemble (30), est amené dans une deuxième position (66) pour l'enroulement et/ou la compression, dans laquelle le mécanisme à bras de levier (62) et ladite au moins une bande (54. 1, 54.2) y guidée est enroulé autour de l'ensemble (30) et, pour retirer l'ensemble (30) avec le mat de bobines (10) inséré, est amené dans la première position (64);
3.6 que, pour la compression, au moins une première bande flexible (54.1) est enroulée autour de l'ensemble (30) dans une première boucle (78) et une deuxième bande flexible (54.2) est enroulée autour de l'ensemble (30) dans une deuxième boucle (80), de sorte que des zones d'ouverture des boucles (78, 80) sont décalées dans la direction circonférentielle et que, sur toute la circonférence de l'ensemble (30), au moins l'une des première et deuxième bandes (54.1, 54.2) est en contact avec l'ensemble (30);
3.7 que l'on fait tourner l'ensemble (30) le long d'une rampe de transfert (106) pour l'enrouler et on l'éloigne de la rampe de transfert (106) pour le comprimer afin de continuer à boucler ladite au moins une bande flexible (54.1, 54.2) autour de l'ensemble (30) .

4. Procédé de réception de mat de bobines selon l'une des revendications précédentes, **caractérisé en ce que**
a) ladite au moins une bande flexible (54.1, 54.2) est d'abord tendue pour être enroulée, puis est déplacée par rapport au mat de bobines (10) enroulé autour de l'ensemble (30) dans une direction radiale afin de l'enrouler autour du mat de bobines (10) sous tension, et/ou
b) le mat de bobines (10) est enroulé autour de l'ensemble (30) au moyen de la bande flexible (54.1, 54.2) .

5. Procédé de réception de mat de bobines selon l'une des revendications précédentes, **caractérisé en ce que**
5.1 ladite au moins une bande flexible (54.1, 54.2) est formée par au moins une courroie (58.1a, 58.1b, 58.2a, 58.2b) ou plusieurs courroies (58.1a, 58.1b, 58.2a, 58.2b) qui sont déplacées dans leur direction longitudinale et/ou
5.2 ladite au moins une bande flexible (54.1, 54.2) est guidée sur des rouleaux de manière à pouvoir se déplacer longitudinalement; et/ou
5.3 le mat de bobines (10) est enroulé sur l'ensemble (30) au moyen de plusieurs premières courroies (58.1a, 58.1b) et est comprimé au moyen d'au moins une deuxième courroie (58.2a, 58.2b) qui présente un angle d'enroulement inférieur ou égal à celui des premières courroies (58.1a, 58.1b), ou au moyen des premières et de ladite au moins une deuxième courroie (58.1a, 58.1b, 58.2a, 58.2b).

6. Procédé de réception de mat de bobines selon l'une des revendications précédentes, **caractérisé en ce que** le mat de bobines (10) est appliqué sur un outil d'assemblage (28) qui est conçu pour insérer le mat de bobines (10) dans un composant (24) d'une machine électrique et qui présente l'agencement annulaire (30) de rainures (32) s'ouvrant radialement vers l'extérieur.

7. Procédé d'assemblage à réaliser au cours de la fabrication d'un composant (24) d'une machine électrique pour insérer un mat de bobines (10) dans un boîtier annulaire (22) du composant (24) de la machine électrique, lequel est pourvu de rainures (32) s'ouvrant radialement vers l'intérieur pour recevoir (48) un enroulement de bobine à former par le mat de bobines (10), comprenant:
la mise en œuvre du procédé de réception du mat de bobines selon la revendication 6, l'insertion de l'outil d'assemblage (28) dans le boîtier annulaire (22) et le transfert du mat de bobines (10) de l'outil d'assemblage (28) dans le boîtier (22).

8. Procédé d'assemblage selon la revendication 7, **caractérisé par** au moins une ou plusieurs des étapes:
8.1 alignement radial des rainures (32) de l'outil d'assemblage (28) et du boîtier (22),
8.2 maintien et libération du mat de bobines () dans l'outil d'assemblage (28) au moyen de segments (35) mobiles radialement qui délimitent les rainures (32) de l'outil d'assemblage (28),
8.3 maintien du mat de bobines (10) comprimé avant l'insertion de l'outil d'assemblage (28) dans l'outil d'assemblage (28) au moyen d'une liaison par complémentarité de forme et/ou par adhérence dans les rainures (32) de l'outil d'assemblage (28).

9. Dispositif de serrage (42) pour insérer un mat de bobines (10) constitué d'une pluralité de conducteurs (12), chacun ayant des parties droites (14) reliées entre elles par des têtes d'enroulement (16), dans un ensemble annulaire (30) de rainures (32) s'ouvrant radialement vers l'extérieur, comprenant:
un dispositif d'enroulement (122) pour enrouler le mat de bobines (10) sur l'ensemble annulaire (30) de telle sorte que les parties droites (14) soient insérées dans les rainures (32),
au moins une bande flexible (54.1, 54.2) destinée à s'enrouler autour du mat de bobines (10) enroulé sur l'ensemble annulaire (30) afin d'exercer une pression radiale sur le mat de bobines (10), et
un dispositif de commande (116) adapté pour commander le dispositif de tension (42) pour enrouler le mat de bobines (10) sur l'ensemble annulaire (30) de telle sorte que les parties droites (14) soient insérées dans les rainures (32) et,
pour comprimer le mat de bobines (10) enroulé en exerçant la pression radiale sur le mat de bobines (10) au moyen de ladite au moins une bande flexible (54.1, 54.2), la pression radiale sur le mat de bobines (10) étant commandée par le réglage d'une tension sur ladite au moins une bande flexible (54.1, 54.2) enroulée autour du mat de bobines (10) de telle sorte que, pour la compression, une augmentation de la tension sur ladite au moins une bande flexible (54.1, 54.2) enroulée autour du mat de bobines (10) est effectuée.

10. Dispositif de serrage (42) selon la revendication 9, **caractérisé par** au moins une ou plusieurs des caractéristiques suivantes:
10.1 qu'au moins une première bande flexible (54.1) et une deuxième bande flexible (54.2) sont prévues pour s'enrouler autour du mat de bobines (10) dans des zones décalées axialement;
10.2 que le dispositif de serrage (42) présente un dispositif de fixation pour la fixation de la bande flexible (69);
10.3 que le dispositif de serrage (42) présente une unité de déplacement relatif (63) pour le déplacement relatif de la bande flexible fixée (54.1, 54.2) et de l'ensemble (30) afin de boucler la bande fixée (54.1, 54.2) autour de l'ensemble (30);
10.4 que le dispositif de serrage (42) présente un tendeur de bande (108.1, 108.2) pour contrôler la tension de l'au moins une bande (54.1, 54.2),
10.5 que l'au moins une bande flexible (54.1, 54.2) est formée par au moins une courroie (58.1a, 58.1b, 58.2a, 58.2b) qui est mobile sur des rouleaux dans sa direction longitudinale,
10.6 que plusieurs bandes flexibles (54.1, 54.2) sont formées par plusieurs premières courroies (58.1a, 58.1b) guidées sur un premier dispositif de guidage de courroie (60.1) et par au moins une deuxième courroie (58.2a, 58.2b) guidée sur un deuxième dispositif guidage de courroie (60.2), le deuxième dispositif de guidage de courroie (60.2) étant conçu pour enrouler ladite au moins une deuxième courroie (58.2a, 58.2b) autour de l'ensemble (30) dans une mesure inférieure ou égale à celle des premières courroies (58.1a, 58.1b),
10.7 que le dispositif de roulement (122) comprend plusieurs premières courroies (58.1a, 58.1b);
10.8 que le mat de bobines (10) est compressible au moyen d'au moins une deuxième courroie (58.2a, 58.2b) ou compressible au moyen de premières courroies (58.1a, 58.1b) et d'au moins une deuxième courroie (58.2a, 58.2b);
10.9 que le dispositif de serrage (42) présente un dispositif de déplacement de courroie (115) pour déplacer au moins une courroie (58.1a, 58.1b, 58.2a, 58.2b) utilisée comme bande flexible (54.1, 54.2) dans la direction d'extension de la courroie (58.1a, 58.1b, 58.2a, 58.2b);
10.10 que le dispositif de roulement (122) comporte un mécanisme de déplacement (102) pour déplacer en ligne droite le dispositif de serrage (42) pendant l'enroulement;
10.11 que le dispositif de roulement (122) présente un ou plusieurs guides de rampe (104) pour transférer le mat de bobines (10) lors de l'enroulement sur l'ensemble (30) et/ou pour guider une zone enroulée du mat de bobines (10) sur l'ensemble (30).

11. Dispositif de serrage (42) selon l'une quelconque des revendications précédentes, **caractérisé par** un mécanisme à bras de levier (62) qui, dans une première position (64), tend ladite au moins une bande flexible (54.1, 54.2) et qui, dans une seconde position (66), peut être arrangé autour de l'ensemble (30) pour boucler ladite au moins une bande flexible (54.1, 54.2) autour de l'ensemble (30).

12. Dispositif de serrage (42) selon la revendication 11, **caractérisé par** au moins une ou plusieurs des caractéristiques suivantes:
12.1 que le mécanisme à bras de levier (62) comporte un premier bras de fourche (82) monté pivotant à une extrémité et un deuxième bras de fourche (84) articulé pivotant à une autre extrémité du premier bras de fourche (82), l'au moins une bande (54.1, 54.2) étant montée sur le premier bras de fourche (82) et sur le deuxième bras de fourche (84) pour boucler la bande (54.1, 54.2) autour de l'ensemble (30) ;
12.2 que des galets sont prévus dans la zone des articulations du mécanisme à bras de levier (62) pour guider la bande (54.1, 54.2);
12.3 qu'un serre-flan (94) est articulé à une extrémité libre du mécanisme à bras de levier (62) pour maintenir une zone encore à enrouler du mat de bobines (10) pendant l'enroulement;
12.4 que le dispositif de commande (116) est conçue pour modifier un diamètre intérieur du mécanisme à bras de levier (62) dans la deuxième position (66) en fonction d'un diamètre extérieur du mat de bobines (10) qui se modifie lors de l'enroulement;
12.5 que le dispositif de commande (116) est conçu pour commander le dispositif de serrage (42) afin de mettre en œuvre le procédé de réception du mat de bobines selon l'une des revendications 1 à 6.

13. Dispositif d'assemblage (20) pour insérer un mat de bobines (10) dans un boîtier annulaire (22) d'un composant (24) d'une machine électrique, comprenant un dispositif de serrage (42) selon l'une des revendications précédentes et un outil d'assemblage (28) avec l'ensemble (30) de rainures (32) s'ouvrant radialement vers l'extérieur, l'outil d'assemblage (28) étant conçu pour insérer le mat de bobines (10) dans le boîtier annulaire (22).

14. Dispositif d'assemblage (20) selon la revendication 13, **caractérisé par** une ou plusieurs des caractéristiques suivantes:
14.1 qu'il est prévu un dispositif de maintien (40) pour maintenir le mat de bobines (10) et un support d'outil d'assemblage (120) pour faire rouler l'outil d'assemblage (28) sur le dispositif de maintien (40) et un dispositif de déplacement relatif (100) pour déplacer linéairement de manière relative le dispositif de maintien (40) et le support d'outil d'assemblage (120);
14.2 que l'outil d'assemblage (28) est équipé de segments (35) mobiles radialement, qui délimitent les rainures (32) de l'outil d'assemblage (28).
